# FASCICULE DE BREVET EUROPEEN

(11) **EP 2 424 926 B1**
(45) Date de publication et mention de la délivrance du brevet: **03.07.2019**
(21) Numéro de dépôt: 10719753.5
(22) Date de dépôt: 30.04.2010
(51) Int. Cl.: C08J 3/28, C08J 7/12, C08J 7/14, C23C 18/16, C23C 18/18, C08J 7/04, C08J 7/16

(54) **PROCÉDÉ POUR MODIFIER CHIMIQUEMENT UNE MATRICE POLYMÉRIQUE DANS SA PROFONDEUR**
VERFAHREN ZUR CHEMISCHEN MODIFIZIERUNG EINER POLYMERMATRIX DURCH DEREN DICKE
METHOD FOR CHEMICALLY MODIFYING A POLYMER MATRIX THROUGH THE THICKNESS THEREOF

(30) Priorité: 30.04.2009 FR 0952891; 27.08.2009 FR 0955859
(43) Date de publication de la demande: 07.03.2012
(73) Titulaire: Commissariat à l'Énergie Atomique et aux Énergies Alternatives, 75015 Paris (FR)
(72) Inventeur: BERTHELOT, Thomas, F-91940 Les Ulis (FR); BAUDIN, Cécile, F-75014 Paris (FR)
(74) Mandataire: Ilgart, Jean-Christophe
(86) Numéro de dépôt international: PCT/EP2010/055923
(87) Numéro de publication internationale: WO 2010/125191

(56) Documents cités:
- WO-A2-2004/004053
- MARASESCU F-E ET AL: "Vacuum Ultraviolet Photolysis of Hydrocarbon Polymers" MACROMOLECULAR CHEMISTRY AND PHYSICS, WILEY-VCH VERLAG, WEINHEIM, DE, vol. 206, no. 7, 6 avril 2005 (2005-04-06), pages 744-757, XP008119918 ISSN: 1022-1352 [extrait le 2005-04-08]
- DARGAVILLE, T.R., ELLIOTT, J.M., CELINA, M.: "Evaluation of Piezoelectric PVDF Polymers for Use in Space Environments. III. Comparison of the Effects of Vacuum UV and Gamma Radiation" JOURNAL OF POLYMER SCIENCE: PART B: POLYMER PHYSICS, vol. 44, no. 22, 13 octobre 2006 (2006-10-13), pages 3253-3264, XP002571880 cité dans la demande
- QILAN DENG ET AL: "PREPARATION OF POLYMER BRUSHES FROM POLY(VINYLIDENE FLUORIDE) SURFACES BY UV IRRADIATION PRETREATMENT", SURFACE REVIEW AND LETTERS, WORLD SCIENTIFIC PUBLISHING CO, SG , vol. 14, no. 1 1 February 2007 (2007-02-01), pages 23-30, XP008162558, ISSN: 0218-625X, DOI: 10.1142/S0218625X07009013 Retrieved from the Internet: URL:http://www.worldscientific.com/doi/abs /10.1142/S0218625X07009013
- CLOCHARD M-C ET AL: "Tailoring bulk and surface grafting of poly(acrylic acid) in electron-irradiated PVDF", POLY, ELSEVIER SCIENCE PUBLISHERS B.V, GB, vol. 45, no. 26, 1 December 2004 (2004-12-01), pages 8683-8694, XP004652156, ISSN: 0032-3861, DOI: 10.1016/J.POLYMER.2004.10.052
- Sami Hietala ET AL: "Phase separation and crystallinity in proton conducting membranes of styrene grafted and sulfonated poly(vinylidene fluoride)", JOURNAL OF POLYMER SCIENCE, PART A: POLYMER CHEMISTRY, vol. 37, no. 12, 15 June 1999 (1999-06-15) , pages 1741-1753, XP055440746, ISSN: 0887-624X, DOI: 10.1002/(SICI)1099-0518(19990615)37:12<174 1::AID-POLA3>3.0.CO;2-5
- Patrick Farquet ET AL: "Extreme UV Radiation Grafting of Glycidyl Methacrylate Nanostructures onto Fluoropolymer Foils by RAFT-Mediated Polymerization", Macromolecules, vol. 41, no. 17, 9 September 2008 (2008-09-09), pages 6309-6316, XP055440812, US ISSN: 0024-9297, DOI: 10.1021/ma800202b
- Wolfgang Kesting ET AL: "Oberflachenstrukturierung polymerer Fasern durch UV-Laserbestrahlung 10. UV-laserinduzierte Pfropfcopolymerisation von Acrylsaure auf Polypropylen*", Die Angewandte Makromolekulare Chemie, 1 January 1990 (1990-01-01), XP055440969, Retrieved from the Internet: URL:https://s3.amazonaws.com/objects.readc ube.com/articles/downloaded/wiley/eeaa22c8 b41e4368d0d841e146bd2b28f8be7991763f1338cc 1fabb9476450d8.pdf?X-Amz-Algorithm=AWS4-HM AC-SHA256&X-Amz-Credential=AKIAIS5LBPCM5JP OCDGQ/20180115/us-east-1/s3/aws4_request&X -Amz-Date=20180115T140434Z&X-Amz-Expires=1 22125&X-Am

## Description

### DOMAINE TECHNIQUE

La présente invention concerne le domaine des matériaux polymères.

Plus particulièrement, la présente invention propose un procédé permettant de modifier chimiquement un matériau polymère en profondeur, i.e. dans l'épaisseur du matériau, pour notamment en modifier les propriétés et les caractéristiques. Cette modification chimique consiste à créer des zones activées dans l'épaisseur du polymère qui peuvent, par la suite, soit permettre un greffage radicalaire d'un composé à insaturation éthylénique et/ou d'unités répétitives issues d'un tel composé, soit être révélées ou creusées.

### ÉTAT DE LA TECHNIQUE ANTÉRIEURE

La modification chimique des polymères présente un grand nombre d'applications qui incluent la recyclabilité des polymères, la réticulation des polymères et le greffage sur polymères permettant de leur donner de nouvelles propriétés et caractéristiques telles que biocompatibilité, métallisation, adhésivité, mouillabilité ou antisalissure (pour « antifouling »). La modification chimique des polymères peut également être utilisée pour préparer des membranes conductrices de protons de pile à combustible par radiogreffage (Demande internationale WO 2009/040365 **[1]**).

La modification chimique de polymères induite par rayonnement repose essentiellement sur le greffage de polymères sur ou au sein d'un premier polymère ayant subi une irradiation avec des rayonnements ionisants tels que rayonnement γ, irradiation par faisceau d'électrons ou par faisceau d'ions lourds.

Le traitement de polymères par des rayonnements ionisants entraîne un transfert d'énergie du rayonnement incident vers le matériau dans lequel il provoque l'excitation et/ou l'ionisation de certains atomes ou molécules. Cette excitation déclenche un processus chimique de formation de radicaux libres par éjection des électrons du nuage électronique des atomes. Ces radicaux libres vont pouvoir par la suite être utilisés par chimie radicalaire pour introduire de nouvelles fonctions au sein du premier polymère. En fonction du type de rayonnement utilisé et de son énergie, leur pouvoir de pénétration au sein du matériau est différent. Ceci entraîne donc une modification chimique différente. Généralement ces types de rayonnement sont utilisés pour modifier dans la masse un polymère.

Le greffage s'effectue en deux étapes, qui interviennent simultanément ou consécutivement, selon que le monomère, qui va modifier le premier polymère, est présent ou non lors du traitement par les rayonnements ionisants. Ce monomère doit être porteur d'une insaturation de type vinylique, allylique ou acrylique **[1].**

Une des principales techniques pour modifier la surface de matériaux polymères est la polymérisation de surface induite par irradiation UV (**[2]** et **[3]**). Cette technique présente l'intérêt d'être simple d'utilisation et peu couteuse. D'autres techniques ont été développées pour modifier les propriétés de surface de polymère comme le dépôt en surface (spin-coating ...) qui résulte seulement d'une physisorption, la modification chimique de surface permettant d'intégrer une ancre pour le greffage covalent de chaînes de polymères, les traitements plasma, l'effet corona, le flammage **[2]...**

Les modifications induites par irradiation UV peuvent être réalisées en présence de photo-initiateurs. Ainsi, les substrats polymères sont :
i) modifiés chimiquement dans un premier temps pour introduire à la surface et de façon covalente le photo-initiateur, ou
ii) modifiés par adsorption directe du photo-initiateur, ou
iii) mis en contact avec une solution de monomères et de photo-initiateurs, ou
iv) modifiés en amont par incorporation d'un groupe photo-initiateur au niveau d'une chaîne latérale ou au niveau de la chaîne principale du polymère constituant le matériau.

Le rôle du photo-initiateur est d'initier la polymérisation sous l'effet de la lumière. Il en existe différentes sortes qui sont présentés dans les articles **[2]** et **[3],** tout comme les différents substrats et films obtenus à la surface des matériaux.

Les modifications induites par irradiation UV peuvent être réalisées en absence de photo-initiateur. Dans cette variante, le photo-greffage (« photo-grafting ») sans photo-initiateur peut être dû à un type particulier de membranes que sont les poly(arylsulfone) (PSf) et les polyéthersulfone (PES). En effet, ces 2 types de membranes présentent la propriété d'être photo-sensibles de façon intrinsèque et de générer des radicaux libres lorsqu'elles sont irradiées à l'UV **[2].** Récemment, l'irradiation sous azote d'un film de PVDF avec une lampe UV (297 nm) suivie d'une mise en contact avec l'atmosphère ambiante pendant 10 min a permis la formation de peroxydes et d'hydroperoxydes à sa surface. En effet, lorsque les polymères fluorés sont soumis à une irradiation UV, une défluorination s'effectue avec apparition de radicaux alkyles. Ces radicaux peroxydes et hydroperoxydes vont initier la polymérisation de poly(méthyl méthacrylate) (pMMA) à la surface du PVDF **[4].**

L'utilisation de longueurs d'onde plus courtes (donc d'énergies plus grandes) est généralement utilisée pour modifier la surface de polymères sans l'ajout de photo-initiateur. L'irradiation sous atmosphère ambiante ou riche en un gaz actif comme l'ammoniaque ou l'hydrazine, par des lampes dites excimères entraîne une modification de surface avec création de liaisons ou de fonctions riches en oxygène, ou de liaisons ou fonctions riches en azote respectivement **[5]** et **[6].** Ces nouvelles fonctions incorporées à la surface du matériau polymérique peuvent être, dans un second temps, fonctionnalisées de façon chimique pour apporter une propriété spécifique au polymère.

L'irradiation de film de polyester avec une lampe excimère Xe (172 nm) sous atmosphère ambiante a permis par la suite le greffage d'acide acrylique. Les modifications engendrées par ce type de lampe n'affectent que la surface des polymères traités (entre 50 et 100 nm) **[7].** La même procédure d'irradiation a été utilisée sur du poly(éthylène téréphthalate) (PET) en présence de 1-octène et n-nonane sous forme vapeur. Le greffage photochimique a été validé par XPS et angle de contact **[8].**

Cependant, il faut noter par exemple, qu'une excitation plus dense peut conduire à la réticulation (**[9]** et **[10]**) ou à des scissions de chaînes **([**1**0]** et **[11]**).

Des travaux de l'art antérieur, il semble que les irradiations V-UV (pour « Vacuum-UV ») permettent de modifier la surface des polymères sans engendrer de dégât dans le « bulk » (i.e. la profondeur, le volume ou l'épaisseur) des polymères. Ceci est expliqué par le fait que la pénétration des V-UV dans les polymères n'excèderait pas quelques centaines de nanomètres en raison du coefficient d'absorption élevé des polymères **[12].**

L'effet de l'irradiation V-UV (112 nm) sous vide a montré que la destruction du polymère dépend de sa structure, de son coefficient d'absorption mais aussi de l'intensité et de la longueur d'onde du rayonnement V-UV. Ce type d'irradiation produit des scissions de liaisons et la formation de radicaux libres à la surface, et ceci à une distance inférieure à 250 nm par rapport à la surface. Il y a alors création de fragments de chaînes libérées depuis la surface sous forme d'espèces volatiles, création de liaisons éthyléniques, formation de réticulations ou les deux **[13].**

L'irradiation V-UV de films de PVDF et de P(VDF₇₀-TrFE₃₀) a montré que le degré de réticulation obtenu diffère après irradiation γ ou V-UV. Il dépend des caractéristiques d'absorption du polymère. Dans des films de PVDF (homopolymère), les courtes longueurs d'onde sont absorbées dans les premiers micromètres de son épaisseur alors que les hautes longueurs d'onde sont dissipées sous forme de chaleur dans le polymère. Pour les copolymères du PVDF, il y a équivalence pour les petites longueurs d'onde, alors que les plus grandes longueurs d'onde sont absorbées dans le « bulk » et génèrent des radicaux qui par recombinaison donnent des réticulations. L'irradiation du PVDF par les UV entraîne principalement des scissions de chaînes **([9]** et **[11]**).

Les modifications peuvent également être induites par irradiation Laser. Généralement, les lasers sont utilisés pour réaliser l'ablation de polymères et créer la structuration de surface **[14].** L'irradiation de film de PVDF avec des lasers excimères ArF et KrF a permis de produire des structures du type diènes et triènes à la surface par des processus mono et multiphotoniques **[15].**

Ce type d'irradiation réalisée sous des atmosphères riches en ammoniaque ou en hydrazine gaz conduit à l'incorporation en surface d'atome d'azote ou à la formation de fonctions amines sur des membranes en PC ou en PTFE **([16]** et **[17]**).

L'irradiation d'un film de PET de 70 µm d'épaisseur avec un Laser CO₂ sous atmosphère riche en oxygène a permis, par la suite, le greffage à la surface d'un film de polyacrylamide de 15 µm. Pour les auteurs, il ne peut y avoir de greffage dans le « bulk » après une irradiation au laser **[18].** De la même façon, l'irradiation d'un film de polyuréthane (PU) en présence d'une solution aqueuse d'acide alginique par un Laser excimère XeCl a conduit à la création d'une liaison covalente entre la surface du PU et l'acide alginique **[19].**

D'une part, la modification chimique dans la profondeur d'une matrice polymérique par greffage radicalaire d'un composé porteur d'une insaturation éthylénique ou d'unités répétitives issues d'un tel composé implique l'irradiation de ladite matrice par exemple, par un faisceau d'électrons, par des ions lourds ou par rayonnement γ **[1].** Ces techniques ne peuvent être mises en oeuvre qu'en utilisant un matériel lourd et onéreux. Il existe donc un réel besoin d'un procédé permettant la modification d'une matrice polymérique en profondeur simple à mettre en oeuvre et peu coûteux. D'autre part, il est clair pour l'homme du métier, de par l'abondant état de la technique à sa disposition, que le greffage radicalaire dans la profondeur d'une matrice polymérique ne peut être obtenu en irradiant cette dernière par les UV.

Des travaux de l'art antérieur décrivent la modification chimique d'une matrice polymérique, par greffage du méthacrylate de glycidyle dans des feuilles de polymère fluoré activées par un rayonnement UV extrême sous vide, émis par synchroton **[20]** et par greffage de l'acide acrylique dans des films de polypropylène induit par UV-laser opérant à une longueur d'onde de 248 nm **[21].**

### EXPOSÉ DE L'INVENTION

Les travaux des inventeurs ont permis de résoudre le problème technique décrit ci-dessus tout en vainquant le préjugé technique tel que défini ci-dessus et ce, par un choix approprié de matrice polymérique, de longueur d'onde d'irradiation et de monomère à greffer. En effet, par la sélection particulière de tels éléments, les inventeurs ont montré que le greffage par un composé porteur d'une insaturation éthylénique ou d'unités répétitives issues d'un tel composé était possible dans l'épaisseur d'une matrice polymérique.

Plus particulièrement, les inventeurs ont montré que l'irradiation de certaines matrices polymériques par des UV présentant une certaine longueur d'onde permet d'obtenir dans l'épaisseur de ladite matrice des zones activées qui peuvent participer à un greffage radicalaire.

Cette étape d'irradiation a pour fonction de créer des radicaux libres dans le matériau constitutif de la matrice, cette création de radicaux libres étant une conséquence du transfert d'énergie de l'irradiation audit matériau. Par exemple, dans le cas d'une matrice polymérique en polyflurorure de vinylidène, les radicaux libres créés sont des groupes alkyles et fluoroalkyles porteurs d'un électron libre. Les radicaux générés dans la profondeur de la matrice polymérique irradiée sont relativement stables avec des durées de vie notamment supérieures à 24 h. Même si la matrice polymérique irradiée conformément au procédé de l'invention peut présenter une certaine réticulation avec recombinaison des radicaux, les inventeurs ont clairement démontré qu'un grand nombre de radicaux sont encore présents dans la matrice ; ces « radicaux rémanents » sont utilisables pour greffer dans l'épaisseur de la matrice des monomères éthyléniques ou bien pour permettre la destruction du polymère irradié et sculpter ainsi la matrice pour créer par exemple l'empreinte d'un objet à trois dimensions au sein de celle-ci.

D'un point de vue mécanistique, lorsque le rayonnement UV vecteur d'énergie traverse la matrice, il cède à cette dernière son énergie en créant des zones activées. Les zones activées sont générées dans l'épaisseur de la matrice polymérique et présentent des chaînes courtes de polymères, formées par scission des chaînes existantes lors du passage du rayonnement UV dans la matière durant l'irradiation et présentant des radicaux libres.

Ainsi, la présente invention concerne un procédé pour modifier chimiquement une matrice polymérique choisie parmi les matrices en polymères fluorés présentant aucun groupement aromatique dans la chaîne principale ou dans les chaînes latérales et les matrices en polymères aliphatiques comprenant plusieurs unités, identiques ou différentes, de formule (I) :

-C(R₁)(R₂)-C(R₃)(R₄)- (I)

dans laquelle les groupements R₁, R₂, R₃ et R₄, identiques ou différents, sont choisis parmi un hydrogène, un halogène, un groupement alkyle en 1 à 6 atomes de carbone éventuellement substitué et un groupement hétéroalkyle en 1 à 6 atomes de carbone éventuellement substitué, un groupement nitro, un groupement cyano, un groupement aminé, un groupement acide carboxylique, un groupement acide sulfonique, un groupement amide, un groupement ester, un groupement imide et un groupement éther, ledit procédé caractérisé en ce qu'il comprend les étapes consistant à :
a1) irradier, sous gaz inerte, ladite matrice par une lumière UV de longueur d'onde inférieure à 300 nm en utilisant une lampe excimère V-UV, où V-UV représente une sous-bande de l'UV-C de 200 à 100nm, ou des irradiations laser effectuées avec un laser impulsionnel Nd:YAG opérant à 266 nm, pour générer, à une distance supérieure à 250 nm vis-à-vis de la surface de la dite matrice, des zones présentant des chaînes courtes de polymères, formées par scission des chaînes existantes lors du passage du rayonnement UV et présentant des radicaux libres ci-après désignées « zones activées »,
b₁) mettre en contact ladite matrice irradiée et ne présentant que des radicaux de type alkyle obtenue à l'étape (a₁) avec une solution contentant au moins un composé porteur d'au moins une insaturation éthylénique,ladite solution étant soumise à une barbotage sous azote préalablement à ladite mise en contact et dès cette mise en contact, et induire un greffage par réaction radicalaire dans la matrice polymérique d'au moins une unité issue du composé porteur une insaturation éthylénique et avantageusement de plusieurs unités du (ou des différents) composé (s) porteur (s) d'une insaturation éthylénique mis en présence de la matrice polymérique irradiée, la 1^{ère} de ces unités étant liée à la matrice polymérique par une liaison covalente impliquant un atome de ladite matrice et un atome de ladite unité.

La présente invention concerne également un procédé pour modifier chimiquement une matrice polymérique selon les revendications dépendantes 2 à 6 et un procédé pour structurer une matrice polymérique en un polymère fluoré ou en un polymère aliphatique consistant à soumettre cette dernière à un procédé tel que défini à l'une quelconque des revendications 1 à 6, dans lequel par structurer on entend créer des zones activées disposées selon un schéma prédéterminé, créer un "patterning", et induire le greffage de composés uniquement dans les zones activées.

Dans le cadre de la présente invention, on entend par « modifier chimiquement » un greffage dans la matrice polymérique d'au moins une unité issue du composé porteur une insaturation éthylénique et avantageusement de plusieurs unités du (ou des différents) composé(s) porteur(s) d'une insaturation éthylénique mis en présence de la matrice polymérique irradiée, la 1^{ère} de ces unités étant liée à la matrice polymérique par une liaison covalente impliquant un atome de ladite matrice et un atome de ladite unité.

Dans le cadre de la présente invention, on entend par « modifier chimiquement dans son épaisseur » le fait que la création, le greffage ou la révélation tels que précédemment définis a lieu en profondeur dans la matrice polymérique (i.e. dans le « bulk » de la matrice), par opposition à la surface de ladite matrice, et ce à une distance supérieure à 150 nm, notamment supérieure à 200 nm et, en particulier, supérieure à 250 nm vis-à-vis de la surface de la matrice polymérique subissant l'irradiation aux UV. Les expressions « en profondeur », « dans l'épaisseur de la matrice » et « dans le volume de la matrice » sont des expressions équivalentes.

Pour rappel, les UV sont classés en fonction de leur longueur d'onde avec UV-A de longueur d'onde comprise entre 400 et 315 nm ; UV-B de longueur d'onde comprise entre 315 et 280 nm et UV-C de longueur d'onde comprise entre 280 et 10 nm. La bande spectrale des UV-C est constituée de trois sous-bandes : (1) UV-C de 280 à 200 nm ; (2) V-UV de 200 à 100 nm, c'est-à-dire les UV exploités dans le vide uniquement et (3) X-UV de 100 à 10 nm, transitions électromagnétiques entre les UV et les rayons X.

La présente invention s'applique à une matrice polymérique se présentant avantageusement sous la forme d'une bande de forme rectangulaire, carrée, ronde, ovale ou quelconque. Avantageusement, la bande de matrice polymérique utilisée dans le procédé selon l'invention présente une surface comprise entre 1 mm² et 1 m², notamment entre 10 mm² et 10 dm² et, en particulier, entre 1 cm² et 1 dm² et une épaisseur comprise entre 1 µm et 1 cm, notamment entre 2 µm et 500 µm et, en particulier, entre 5 µm et 100 µm. De plus, la matrice polymérique présente avantageusement au moins une des deux propriétés suivantes :
- d'être une matrice polymérique non poreuse ;
- d'être une matrice polymérique transparente.

Dans une première variante de matrice polymérique mise en oeuvre dans le cadre de la présente invention, cette dernière est une matrice en polymères fluorés. Par « polymère fluoré », on entend dans le cadre de la présente invention un polymère ou un co(polymère) présentant un ou plusieurs substituants fluorés et aucun groupement aromatique dans la chaîne principale ou dans les chaînes latérales.

N'importe quel polymère fluoré est utilisable dans le cadre de la présente invention. Avantageusement, la matrice polymérique utilisée dans le cadre de la présente invention est une matrice en un polymère fluoré choisi dans le groupe constitué par :
- un homopolymère de fluorure de vinylidène (PVDF), notamment sous forme α ou sous forme β ;
- les copolymères de fluorure de vinylidène avec, par exemple, l'hexafluoropropylène (HFP), le chlorotrifluoroéthylène (CTFE), l'hexafluoropropylène (HFP), le perfluorométhylvinyl éther, le trifluoroéthylène (VF3), le tétrafluoroéthylène (TFE) et les mélanges de ceux-ci ;
- les copolymères de fluorure de vinylidène, de trifluoroéthylène et de monochlorotrifluoroéthylène (VDF-co-TrFE-co-chloroTrFE) ;
- les homo- et copolymères de trifluoroéthylène (VF3), notamment avec le tétrafluoroéthylène ;
- les copolymères de fluoroéthylène et de propylène ;
- les copolymères de tétrafluoroéthylène et de tétrafluoropropylène ;
- les copolymères d'éthylène et d'au moins un monomère fluoré tel que, par exemple, le fluoroéthylène/propylène (FEP), le tétrafluoroéthylène, le perfluorométhylvinyl éther (PMVE), le chlorotrifluoroéthylène (CTFE), l'hexafluoropropylène (HFP) et les mélanges de ceux-ci ;
- et leurs mélanges.

Une matrice polymérique en polymère fluoré avantageusement utilisée dans le cadre de la présente invention est une matrice en PVDF.

Dans une seconde variante de matrice polymérique mise en oeuvre dans le cadre de la présente invention, cette dernière est une matrice en polymères aliphatiques. Par « polymère aliphatique », on entend un polymère ou un co(polymère) ne présentant pas de groupement aromatique ni dans la chaîne principale, ni dans les chaînes latérales.

Dans le cadre de la présente invention le polymère aliphatique comprend plusieurs unités, identiques ou différentes, de formule (I) :

-C(R₁)(R₂)-C(R₃)(R₄)- (I)

dans laquelle les groupements R₁, R₂, R₃ et R₄, identiques ou différents, sont choisis parmi un hydrogène, un halogène, un groupement alkyle en 1 à 6 atomes de carbone éventuellement substitué et un groupement hétéroalkyle en 1 à 6 atomes de carbone éventuellement substitué, un groupement nitro, un groupement cyano, un groupement amine, un groupement acide carboxylique, un groupement acide sulfonique, un groupement amide, un groupement ester, un groupement imide et un groupement éther.

Par « groupement alkyle en 1 à 6 atomes de carbone », on entend dans le cadre de la présente invention un groupement alkyle linéaire, ramifié ou cyclique, présentant de 1 à 6, notamment de 1 à 4 et, en particulier, 1, 2 ou 3 atomes de carbone.

Par « groupement hétéroalkyle en 1 à 6 atomes de carbone », on entend dans le cadre de la présente invention un groupement alkyle tel que précédemment défini comprenant en outre au moins un hétéroatome avantageusement choisi dans le groupe constitué par O, N, P ou S.

Par « éventuellement substitué », on entend, dans le cadre de la présente invention, un groupement qui peut être substitué par un ou plusieurs groupes choisis parmi un halogène, un hydroxy, un cyano, un nitro, un groupement amine, un groupement acide carboxylique, un groupement acide sulfonique, un groupement amide, un groupement ester, un groupement imide ou un groupement éther.

Une matrice polymérique en polymère aliphatique avantageusement utilisée dans le cadre de la présente invention est une matrice en polypropylène (PP) ou en polyéthylène (PE).

Une source de lumière UV permettant d'irradier la matrice polymérique à une longueur d'onde inférieure à 300 nm et notamment comprise entre 100 nm et 300 nm peut être par exemple une lampe UV, une lampe à mercure à basse pression, une lampe à mercure à moyenne pression, une lampe à mercure à haute pression, une lampe à mercure à très haute pression, une lampe à arc électrique, une lampe aux halogénures, une lampe au xénon, un laser, un laser excimère ArF, un laser excimère KrF, une lampe excimère ou un rayonnement synchroton.

Dans le cadre de l'étape d'irradiation de la présente invention, l'irradiation peut être générée par un laser tel qu'un laser impulsionnel INDI Nd:YAG opérant à 266nm (Spectra Physics).

En variante, l'irradiation du procédé selon l'invention peut être générée par une lampe excimère
où V-UV représente une sous-bande de l'UV-C de 200 à 100 nm, telle qu'une lampe à excimère au Xenon.

De plus, il est possible, dans le cadre de la présente invention, de créer des zones activées disposées selon un schéma prédéterminé, et d'induire ainsi par voie de conséquence le greffage de composés uniquement dans les zones susmentionnées. On peut parler de structuration de la matrice polymérique ou « patterning ». En effet, il est possible d'induire différents schémas de greffage.

Une première technique permettant une telle structuration consiste à moduler l'angle d'irradiation par rapport à la normale des faces de la matrice en utilisant notamment un laser. Cet angle est avantageusement compris entre 0 et 90°, notamment entre 5° et 60°, en particulier entre 15° et 45° et, plus particulièrement, de l'ordre de 30° (e.g. 30° ± 5°). Il est possible de créer, par exemple, une matrice comprenant des zones actives traversant la matrice orientée dans deux directions symétriques. Il est possible d'utiliser deux sources de rayonnements UV distinctes telles que deux lasers ou de procéder successivement à une irradiation selon deux directions pour créer des schémas de greffage, où les zones actives sont croisées.

Une deuxième technique permettant une telle structuration consiste à réaliser l'étape d'irradiation en présence d'un masque. Par « masque », on entend un matériau absorbant les UV présent à la surface de la matrice polymérique et la recouvrant en partie, sans être greffée ou liée de façon covalente à cette dernière. Ce matériau permet, par conséquent, de « masquer » un volume donné aux rayonnements UV et ainsi d'empêcher dans ce volume la formation de radicaux libres suite à l'irradiation et donc le greffage de composés porteurs d'insaturation éthylénique. L'homme du métier connaît différents matériaux utilisables en tant que masque tels que des matériaux en silice, en résine, en Cr, en TaN, ou des matériaux utilisés en lithographie extrême UV. L'utilisation d'un tel masque permet de créer dans le volume de la matrice polymérique un « patterning » 3D, notamment en créant des « canaux » de polymères greffés, lorsque ledit masque est associé à une irradiation UV générée par un laser.

Une troisième technique permettant une telle structuration consiste à créer une structure du type couche dans la matrice polymérique avec, par exemple, une couche matrice polymérique radiogreffée, une couche matrice polymérique seule et une couche matrice polymérique radiogreffée. Une telle structure en couches peut être obtenue en utilisant :
- des plages de longueur d'onde différentes (inférieure à 300 nm en utilisant une lampe excimère V-UV, où V-UV représente une sous-bande de l'UV-C de 200 à 100 nm, ou des irradiations laser effectuées avec un laser impulsionnel Nd:YAG opérant à 266 nm. pour obtenir une couche radiogreffée dans l'épaisseur et supérieure à 300 nm et notamment conprise entre 300 nm et 500 nm pour une couche radiogreffée en surface) ; et/ou
- différents temps d'irradiation.

L'étape d'irradiation dans le procédé selon l'invention dure de 1 min à 5 h, notamment de 5 min à 1 h, en particulier, de 15 min à 45 min et, plus particulièrement, de 10 min à 45 min. L'irradiation peut être unique ou être répétée plusieurs fois, notamment de 2 à 20 fois et en particulier, de 3 à 10 fois. Dans cette variante, la longueur d'onde utilisée peut être constante ou variable d'une irradiation à l'autre ou au cours d'une même irradiation et chaque irradiation peut être d'une durée identique ou différente. De même, dans le cas d'une irradiation séquentielle, la durée des irradiations varie typiquement de 5 à 30 min et notamment de 10 à 20 min.

L'étape d'irradiation dans le procédé selon l'invention peut être réalisée à une température comprise entre 5°C et 120°C, notamment entre 10°C et 80°C et, en particulier, entre 15°C et 40°C. Plus particulièrement, l'étape d'irradiation du procédé selon l'invention est réalisée à température ambiante. Par « température ambiante », on entend une température de 20°C ± 5°C.

L'étape d'irradiation dans le procédé selon l'invention est effectuée sous gaz inerte.

L'utilisation d'une atmosphère particulière n'est pertinente que si celle-ci est composée d'un (ou plusieurs) gaz qui n'absorbe (nt) pas à la longueur d'onde d'irradiation.

Quand l' irradiation est effectuée sous air et donc sous oxygène cela permet, pour une matrice en PVDF, la création non seulement de radicaux alkyles mais aussi de radicaux peroxydes. En fait, c'est la rencontre de ces radicaux alkyles avec l'oxygène moléculaire qui produit les radicaux peroxydes. La formation des radicaux peroxydes est limitée à la surface des matériaux et dépend du facteur de diffusion de l'oxygène moléculaire au sein du matériau. Cette diffusion est considérée de l'ordre de 100 à 250 nm à partir de la surface.

Dans le cadre de la présente invention l' étape d'irradiation est effectuée sous gaz inerte tel que l'argon ou sous gaz neutre tel que de l'azote. L'irradiation sous azote ou sous gaz inerte permet de générer seulement des radicaux de type alkyle et de limiter ainsi la présence de radicaux peroxydes. Dans cette variante, préalablement à l'étape d'irradiation du procédé selon la présente invention, l'enceinte dans laquelle se trouve la matrice polymérique en polymères fluorés ou en polymères aliphatiques et dans laquelle sera réalisée l'irradiation peut être soumise à un flux d'azote et ce, pendant une durée comprise entre 5 min et 3 h, notamment comprise entre 15 min et 1 h et, en particulier, de l'ordre de 30 min. Par « de l'ordre de 30 min », on entend une durée de 30 min ± 10 min. De cette façon, l'enceinte est purgée et ainsi la présence d'oxygène dans la chambre d'irradiation est évitée.

Il convient de remarquer que l'étape d'irradiation du procédé selon l'invention ne nécessite avantageusement pas la présence de photoinitiateurs.

Le procédé selon l'invention comprend les étapes consistant à :
a₁) irradier ladite matrice par une lumière UV de longueur d'onde inférieure à 300 nm comme précédemment décrit,
b₁) mettre en contact ladite matrice irradiée obtenue à l'étape (a₁) avec une solution contenant au moins un composé porteur d'au moins une insaturation éthylénique, ladite solution étant soumise à un barbotage sous azote préalablement à ladite mise en contact et dès cette mise en contact et induire le greffage par réaction radicalaire dans la matrice polymérique d'au moins une unité issue du composé porteur une insaturation éthylénique et avantageusement de plusieurs unités du ou des différents composé(s) porteur(s) d'une insaturation éthylénique mis en présence de la matrice polymérique irradiée, la 1^{ère} de ces unités étant liée à la matrice polymérique par une liaison covalente impliquant un atome de ladite matrice et un atome de ladite unité.

Cette forme de mise en oeuvre est basée sur le principe du radiogreffage, c'est-à-dire sur le principe du greffage par réaction radicalaire avec une matrice polymérique préalablement irradiée.

En effet, comme précédemment expliqué, le procédé de l'invention comprend une première étape d'irradiation d'une matrice polymérique, cette étape d'irradiation ayant pour fonction de créer des radicaux libres dans le matériau constitutif de la matrice. De tels radicaux libres sont aptes à initier une réaction radicalaire avec un composé porteur d'au moins une insaturation éthylénique.

Tout ce qui a été précédemment décrit pour l'étape d'irradiation du procédé selon l'invention s'applique également à l'étape (a₁).

Lors de l'étape (b₁) du procédé selon l'invention, le composé destiné à être mis en contact avec la matrice irradiée est un composé comprenant, en tant que groupe apte à réagir par réaction radicalaire avec la matrice pour former une liaison covalente, un groupe éthylénique. Pour ce type de composé, la réaction radicalaire se déroule en deux phases :
- une phase de réaction du composé avec la matrice irradiée, cette phase se matérialisant par une ouverture de la double liaison par réaction avec un centre radicalaire de la matrice, le centre radicalaire se « déplaçant » ainsi de la matrice vers un atome de carbone issu dudit composé ;
- une phase de polymérisation de ce composé à partir du centre radicalaire créé sur le composé greffé.

En d'autres termes, les radicaux libres du matériau constitutif de la matrice engendrent la propagation de la réaction de polymérisation du composé mis en contact avec la matrice. La réaction radicalaire est ainsi, dans ce cas de figure, une réaction de polymérisation radicalaire du composé, à partir de la matrice irradiée.

A l'issue du procédé, les membranes chimiquement modifiées ainsi obtenues comprendront ainsi une matrice polymérique greffée, dans son épaisseur, par des polymères comprenant des unités répétitives issues de la polymérisation du composé mis en contact avec la matrice irradiée.

Les étapes (a₁) et (b₁) du procédé selon la présente invention peuvent être simultanées. Dans ce cas, le composé porteur d'une insaturation éthylénique est présent lors de l'irradiation par les UV de la matrice polymérique.

En variante, les étapes (a₁) et (b₁) du procédé selon la présente invention peuvent être successives. Dans ce cas, le composé porteur d'une insaturation éthylénique est mis en contact avec la matrice polymérique préalablement irradiée.

Le composé présentant au moins une insaturation éthylénique utilisable lors de l'étape (b₁) du procédé est avantageusement un composé de formule (II) :

(R₄)(R₅)C=C(R₆)(R₇) (II)

dans laquelle les groupes R₄ à R₇, identiques ou différents, représentent un atome monovalent non métallique tel qu'un atome d'halogène, un atome d'hydrogène, un groupe chimique saturé ou insaturé, tel qu'un groupe alkyle, aryle, un groupe -COOR₈ ou -OC(O)R₈ dans lequel R₈ représente un atome d'hydrogène ou un groupe alkyle en C₁-C₁₂ et de préférence en C₁-C₆, un nitrile, un carbonyle, une amine ou un amide.

Le composé porteur d'au moins une insaturation éthylénique est avantageusement choisi dans le groupe constitué par les esters vinyliques tels que l'acétate de vinyle, l'acide acrylique, l'acrylonitrile, le méthacrylonitrile, le méthacrylate de méthyle, le 2-hydroxyméthylméthacrylate, le méthacrylate d'éthyle, le 2-diméthylaminoéthylméthacrylate, le méthacrylate de butyle, le méthacrylate de propyle, le méthacrylate d'hydroxyéthyle, le méthacrylate d'hydroxypropyle, le méthacrylate de glycidyle, le méthacrylate de hydroxyéthyle, et leurs dérivés ; un acrylamide et notamment un méthacrylamide d'amino-éthyle, propyle, butyle, pentyle et hexyle, un cyanoacrylate, un di-acrylate et di-méthacrylate, un tri-acrylate et tri-méthacrylate, un tétra-acrylates et tétra-méthacrylate (tels que le pentaérythritol tétra-méthacrylate), le styrène et ses dérivés, le parachloro-styrène, le pentafluoro-styrène, la N-vinyl pyrrolidone, la 4-vinyl pyridine, la 2-vinyl pyridine, les halogénures de vinyle, d'acryloyle ou de méthacryloyle, le di-vinylbenzène (DVB), et plus généralement les agents réticulants vinyliques ou à base d'acrylate, de méthacrylate, et de leurs dérivés.

Lors de la mise en contact de la matrice polymérique irradiée avec le composé porteur d'au moins une insaturation éthylénique, ce dernier se trouve dans une solution (S) avec un solvant. Avantageusement, ledit solvant est un solvant organique ou un solvant protique. A titre d'exemples de solvant protique, on peut citer l'eau, l'eau désionisée, l'eau distillée, acidifiées ou non, l'acide acétique, les solvants hydroxylés comme le méthanol et l'éthanol, les glycols liquides de faible poids moléculaire tels que l'éthylèneglycol, et leurs mélanges.

Même lorsque la matrice polymérique mise en oeuvre est non poreuse ou hydrophobe, la solution (S) contenant le composé porteur d'au moins une insaturation éthylénique est tout à fait capable de pénétrer dans cette matrice et de la regonfler, en choisisant notamment un solvant adapté. Ceci a été largement décrit dans la littérature et notamment dans **[21]** .

La solution (S) mise en oeuvre lors de l'étape (b₁) du procédé peut contenir un seul type de composé porteur d'au moins une insaturation éthylénique ou au moins deux types différents de composé porteur d'au moins une insaturation éthylénique. Dans ce dernier cas, le polymère greffé dans l'épaisseur de la matrice polymérique suite au procédé selon l'invention sera un co(polymère) statistique.

De plus, de façon à éviter l'homopolymérisation des composés porteurs d'au moins une insaturation éthylénique, la solution (S) peut en outre contenir un inhibiteur d'homopolymère choisi parmi les sels inorganiques de métaux polyvalents, notamment le sulfate d'ammonium ferreux et/ou le chlorure de cuivre et, en particulier, le sel de Mohr.

Avantageusement, l'étape (b₁) de mise en contact est effectuée à une température comprise entre 20°C et 120°C, notamment entre 30°C et 100°C, en particulier, entre 40°C et 80°C et, plus particulièrement, à une température de l'ordre de 60°C. Par « de l'ordre de 60°C », on entend une température de 60°C ± 10°C. De plus, l'étape (b₁) du procédé selon l'invention présente une durée comprise entre 15 min et 24 h, notamment entre 30 min et 12 h et, en particulier, entre 1 h et 6 h.

Préalablement à la mise en contact de la solution (S) avec la matrice polymérique irradiée et dès cette mise en contact, la solution (S) est soumise à un barbotage sous azote. Le barbotage à l'azote permet d'enlever l'oxygène moléculaire présent dans la solution. En effet, l'oxygène étant connu comme un inhibiteur de réaction radicalaire, il est donc très avantageux de le faire disparaître pour augmenter le rendement de la réaction.

La présente invention concerne en outre un procédé pour structurer une matrice polymérique en un polymère fluoré ou en un polymère aliphatique consistant à soumettre cette dernière à un procédé tel que précédemment défini. Par « structurer », on entend dans le cadre de la présente invention créer des zones activées disposées selon un schéma prédéterminé, et induire ainsi par voie de conséquence la révélation et/ou le greffage de composés uniquement dans les zones susmentionnées, comme précédemment expliqué. Toutes les variantes (modulation de l'angle d'irradiation, présence d'un masque, temps d'irradiation, longueur d'onde...) précédemment décrites s'appliquent à ce procédé de structuration.

La matrice polymérique modifiée selon le procédé de la présente invention présente au moins un (co)polymère formé d'unités issues d'un ou plusieurs composé(s) porteur(s) d'au moins une insaturation éthylénique étant greffé sur ladite matrice polymérique, dans son épaisseur. Dans la matrice polymérique modifiée chimiquement le (ou les) composé (s) porteur (s) d'au moins une insaturation éthylénique est(sont) tel(s) que précédemment défini(s).

La matrice polymérique modifiée chimiquement obtenue selon le procédé de l'invention présente les mêmes utilisations et applications que toute matrice polymérique modifiée chimiquement et notamment que les matrices polymériques modifiées chimiquement en surface. On peut citer une utilisation pour améliorer l'adhésion métal/matrice polymérique, une utilisation comme membrane conductrice de protons de pile à combustible, comme supersorbants, filtres ou compresses de par la rétention améliorée des solutions ou de composés chimiques particuliers, comme revêtements biocompatibles, comme séparateurs de batteries, etc... Comme la modification chimique de la matrice polymérique selon la présente invention n'est pas limitée à la surface de cette dernière, elle présente l'avantage supplémentaire vis-à-vis des matrices de l'art antérieur que les propriétés et caractéristiques dues au radiogreffage sont maintenues même si la surface de la matrice polymérique est endommagée.

Les avantages du procédé de la présente invention apparaîtront encore à l'homme du métier à la lecture des exemples ci-dessous donnés à titre illustratif et non limitatif, faisant référence aux figures annexées.

### BRÈVE DESCRIPTION DES DESSINS

La Figure 1 présente le spectre de Résonance Paramagnétique Electronique (RPE) après irradiation lampe UV (320-500 nm) sous azote d'un film de PVDF 9 µm.
La Figure 2 présente le spectre de RPE après irradiation Laser Nd :YAG (266 nm) sous azote d'un film de PVDF 9 µm.
La Figure 3 présente le spectre de RPE après irradiation Laser Nd :YAG (266 nm) sous atmosphère ambiante d'un film de PVDF 9 µm.
La Figure 4 présente le spectre de RPE après irradiation V-UV (172 nm) sous azote d'un film de PVDF 9 µm.
La Figure 5 présente le spectre de RPE après irradiation V-UV (172 nm) sous azote d'un film de PVDF 25 µm.
La Figure 6 représente une photographie d'une membrane de PVDF de 9 µm qui a été soumise à une irradiation avec une lampe excimère (172 nm) en présence d'un masque suivie d'un radiogreffage à l'acide acrylique. L'intérieur des formes géométriques et des chiffres est constitué de PVDF-g-PAA alors que le reste de la membrane est du PVDF vierge.
La Figure 7 représente une photographie d'une membrane de PVDF de 9 µm qui a été soumise à une irradiation avec une lampe excimère (172 nm) en présence d'un masque suivie d'un radiogreffage à l'acide acrylique. L'intérieur des formes géométriques et des chiffres est constitué de PVDF vierge alors que le reste de la membrane est du PVDF-g-PAA.
La Figure 8 représente une membrane de PVDF de 9 µm irradié avec une lampe excimère (172 nm) suivi d'une étape de radiogreffage avec de l'acide acrylique puis métallisée. Les zones qui présentent une couleur brune ou cuivrée correspondent aux zones de PVDF-g-PAA qui ont chélaté des ions cuivre qui ont été par la suite réduits.
La Figure 9 représente l'image obtenue au microscope électronique à balayage (MEB) d'une membrane de PVDF de 9 µm préalablement irradiée avec une lampe excimère (172 nm) puis soumise à une révélation chimique. La zone présentée est la plus petite des 3 carrés présents sur le masque de départ.
La Figure 10 représente un grossissement d'une partie de la Figure 9 obtenue au MEB. Elle montre bien que la membrane de PVDF a été « révélée » ou « creusée » au niveau des zones actives qui n'étaient pas protégées par le masque.
La Figure 11 présente l'influence du temps d'irradiation à 172 nm de membrane de PVDF 9 µm sur le rendement de greffage en masse (Y%).
La Figure 12 présente l'influence du temps d'irradiation à 172 nm de membrane de PVDF 25 µm sur le rendement de greffage en masse (Y%).
La Figure 13 présente l'analyse EDX (Fluor et Cuivre) de la tranche d'un film de PVDF 9 µm radiogreffé avec du PAA après irradiation de 30 min avec une lampe excimère V-UV (172 nm) sous azote.
La Figure 14 présente l'analyse EDX (Fluor et Potassium) de la tranche d'un film de PVDF 25 µm radiogreffé avec du PAA après irradiation de 30 min avec une lampe excimère V-UV (172 nm).
La Figure 15 présente l'analyse EDX (Fluor et Potassium) de la tranche d'un film de PVDF 9 µm radiogreffé avec du PAA après irradiation de 30 min avec un Laser Nd :YAG (266 nm) sous azote.
La Figure 16 présente l'analyse EDX (Fluor et Potassium) de la tranche d'un film de PVDF 25 µm radiogreffé avec du PAA après irradiation sous azote de 5 min (Figure 16A), 10 min (Figure 16B), 15 min (Figure 16C), 20 min (Figure 16D) et 30 min (Figure 16E) par une lampe excimère (172 nm).

### EXPOSÉ DÉTAILLÉ DE MODES DE RÉALISATION PARTICULIERS

### A. Matériels et méthodes

***RPE*** : Les spectres RPE sont obtenus avec un appareil Bruker ESP300E à bande X opérant à une fréquence de 9,420 GHz à température ambiante avec une modulation en champ de 100 kHz et une modulation en amplitude de 3 Gauss. Tous les spectres sont normalisés à un échantillon de 100 mg et pour un gain de 10 E⁴.
***Laser*** : Les irradiations laser sont effectuées avec un laser impulsionnel INDI Nd:YAG (Spectra Physics) opérant à 266 nm. La durée de chaque impulsion est de 8 ns et la fréquence de répétition est de 10 Hz. Le diamètre final du rayon laser est de 8 mm et l'énergie délivrée par impulsion est de l'ordre de 2 mJ.
***V-UV*** : Les échantillons sont irradiés à l'aide d'une lampe à excimère au Xenon dont la puissance sur la totalité de la surface est de 15 W. La lumière V-UV a une fréquence de répétition de 30 kHz et la durée de chaque impulsion est de 4 µs.
***UV*** : La lampe Omnicure Série 2000 est utilisée pour irradier les échantillons en UV. D'une puissance totale de 200 W, elle émet de 320 à 500 nm. Elle est utilisée sans filtre et les échantillons sont placés à 4 cm de la source.
***ATR FTIR* :** Les échantillons sont analysés par spectroscopie infra rouge à transformée de Fourier en réflexion totale atténuée (attenuated reflexion transmission (ATR)) avec un spectromètre Magna IR-750 (Nicolet). Pour ces mesures, un cristal diamant ainsi qu'un détecteur DTGS (pour « Deuterated Triglycine Sulfate ») ont été utilisés. Pour les greffages en surface, 128 spectres ont été accumulés avec une résolution de 2 cm⁻¹ et une correction automatique pour H₂O et CO₂. Pour les échantillons greffés dans la masse, 32 spectres ont été accumulés dans les mêmes conditions.
***Mapping FTIR*** : Le mapping des échantillons est réalisé sur un microscope Bruker Hyperion couplé à un spectrophotomètre FTIR Bruker Vertex équipé d'un détecteur MCT.
***Microscopie électronique à balayage et EDX* :** La microscopie électronique à balayage est effectuée à l'aide d'un appareil Philips équipé d'une pointe en hexaborure de lanthane LaB6 et couplé à un détecteur de rayons X (PGT PRISM Digital Spectrometer) ou sonde EDX (Energy Dispersive X) qui permet d'analyser l'énergie des photons X émis par les éléments chimiques de l'échantillon.

Les échantillons sont immergés dans une solution de KOH ou de sulfate de cuivre 0,05 M. Les films sont ensuite inclus dans une résine EPON (Fluka) avant d'être coupés à l'aide d'un microtome Leica. Les coupes réalisées sont ensuite recouvertes par une couche d'or en utilisant un évaporateur et analysées.

**Tableau 1 : NF : Non Fait ; AA : acide acrylique ; HEMA : 2-hydroxyméthylméthacrylate ; DMAEMA : 2-diméthylaminoéthylméthacrylate ; PVDF : Polyfluorure de vinylidène ; PE : Polyéthylène ; PC : Polycarbonate ; PET : Polyéthylène téréphtalate.**

| Polymère | Lampe UV (320-500 nm) | Laser Nd:YAG (266 nm) | Lampe excimère (172 nm) | Polymère Greffé | Greffage en surface | Greffage en volume |
|---|---|---|---|---|---|---|
| PVDF* | X | X | X | AA, HEMA, DMAEMA | X | X |
| PE * | NF | NF | X | AA | X | X |
| PC ^{x} | NF | NF | X | AA | X | |
| PET ^{x} | NF | NF | X | AA | X | |

| | | | | | | |
|---|---|---|---|---|---|---|
| * Polymère selon la présente invention x Polymère non conforme à la présente invention | | | | | | |

### B. Exemples

### I. Irradiations

### I-1. Irradiation UV (500-320 nm).

Une bande de PVDF de 9 µm d'épaisseur (1 cm x 4 cm) a été placée contre la paroi d'un tube en pyrex puis soumis à un flux d'azote pendant 30 min. Le tube pyrex est placé à 4 cm de la fibre optique d'une lampe UV (320-500 nm) sans aucun filtre. L'échantillon est alors soumis à une irradiation UV (le film de PVDF a été placé à une distance de 4 cm en excluant l'épaisseur du tube Pyrex par rapport à l'extrémité de la fibre optique). Quatre irradiations de 15 min chacune sont effectuées successivement.

### I-2. Irradiation Laser Nd :YAG (266 nm).

### I-2.a. PVDF 9 µm sous azote

Une bande de PVDF de 9 µm d'épaisseur (1 cm x 3 cm) est placée dans une cuve en quartz de 5 mm d'épaisseur. Après avoir été soumis à un flux d'azote pendant 15 min, la cuve est obturée et soumise à une irradiation de 30 min.

### I-2.b. PVDF 9 µm sous atmosphère ambiante.

Une bande de PVDF de 9 µm d'épaisseur (1 cm x 3 cm) est placée sur une lame de verre perpendiculaire au faisceau incident du Laser. La surface de la bande est soumise à une irradiation directe de 30 min sous atmosphère ambiante.

### I-3. Irradiation V-UV par une lampe excimère (172 nm).

### I-3.a. PVDF 9 µm sous azote.

Une bande de PVDF de 9 µm d'épaisseur (2,15 cm x 3,8 cm, 13,68 mg) est placée à 7 cm d'une lampe à excimère qui émet un rayonnement incohérent dans le V-UV à 172 nm. La membrane est fixée sur une plaque de verre, l'ensemble est balayé par un flux d'azote pendant 20 min puis soumis à une irradiation de 30 min sous azote à température ambiante.

### I-3.b. PVDF 25 µm sous azote.

Une bande de PVDF de 25 µm d'épaisseur (2,15 cm x 3,8 cm, 13,60 mg) est placée à 7 cm d'une lampe à excimère qui émet un rayonnement incohérent dans le V-UV à 172 nm. La membrane est fixée sur une plaque de verre, l'ensemble est balayé par un flux d'azote pendant 20 min puis soumis à une irradiation de 30 min sous azote à température ambiante.

### I-3.c. Polyéthylène (PE) 10 µm sous azote.

Une bande de polyéthylène (PE) de 10 µm d'épaisseur (1,6 cm x 4,9 cm, 39,44 mg) est placée à 7 cm d'une lampe à excimère qui émet un rayonnement incohérent dans le V-UV à 172 nm. La membrane est fixée sur une plaque de verre, l'ensemble est balayé par un flux d'azote pendant 20 min puis soumis à une irradiation de 30 min sous azote à température ambiante.

### I-3.d. Polyéthylènetéréphthalate (PET) 10 µm sous azote.

Une bande de polyéthylènetéréphthalate (PET) de 10 µm d'épaisseur (1,6 cm x 5 cm, 25,61 mg) est placée à 7 cm d'une lampe à excimère qui émet un rayonnement incohérent dans le V-UV à 172 nm. La membrane est fixée sur une plaque de verre, l'ensemble est balayé par un flux d'azote pendant 20 min puis soumis à une irradiation de 30 min sous azote à température ambiante.

### I-3.e. Polycarbonate (PC) 10 µm sous azote.

Une bande de polycarbonate (PC) de 10 µm d'épaisseur (1,5 cm x 5 cm, 9,17 mg) est placée à 7 cm d'une lampe à excimère qui émet un rayonnement incohérent dans le V-UV à 172 nm. La membrane est fixée sur une plaque de verre, l'ensemble est balayé par un flux d'azote pendant 20 min puis soumis à une irradiation de 30 min sous azote à température ambiante.

### II. Etude des effets d'irradiation sur des membranes de PVDF par RPE.

### II-1. Effets d'irradiation sur du PVDF induite par une lampe UV (320-500 nm).

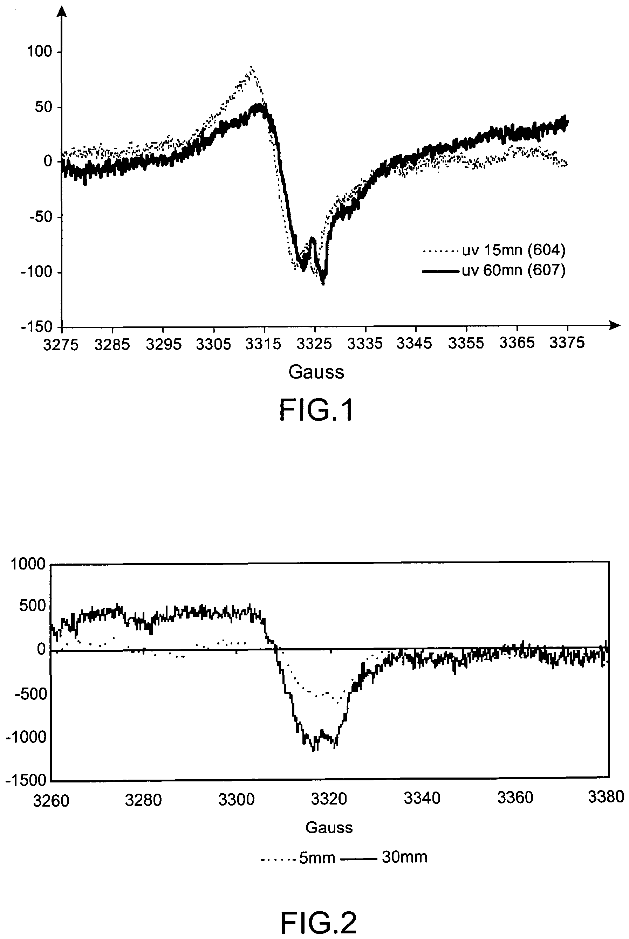

Le spectre de RPE après irradiation lampe UV (320-500 nm) sous azote d'un film de PVDF 9 µm est présenté Figure 1.

Le spectre RPE obtenu montre qu'il y a formation d'un centre paramagnétique (ou défaut) c'est-à-dire un électron non apparié ou radical. L'intensité du signal montre une quantité très faible de ces défauts. De plus, le suivi de leur apparition au cours du temps montre que l'intensité du signal reste constante. L'irradiation UV 320-500 nm ne semble que « décorer » c'est-à-dire « activer » des défauts qui sont déjà présents en surface des membranes et ce dans des quantités relativement faibles.

### II-2. Effets d'irradiation sur du PVDF induit par un Laser Nd :YAG (266 nm) sous azote et sous atmosphère ambiante.

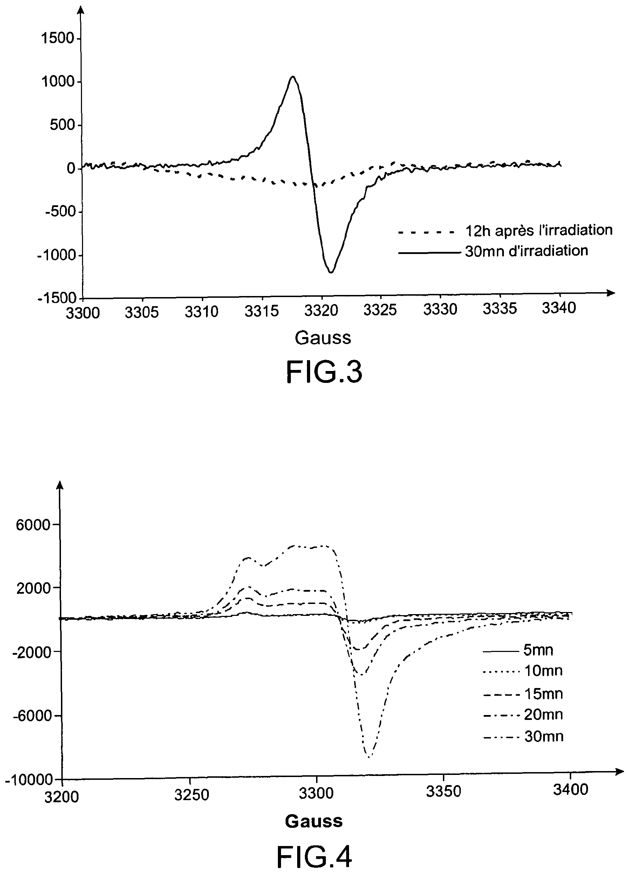

Les spectres de RPE après irradiation Laser Nd :YAG (266 nm) d'un film de PVDF 9 µm sous azote et sous atmosphère ambiante sont respectivement présentés Figure 2 et Figure 3.

Le spectre RPE ainsi obtenu montre également la présence d'un défaut (centre paramagnétique) c'est-à-dire un électron non apparié ou radical. Il faut noter que la forme de la courbe est différente ce qui démontre que les défauts générés sont différents de par leur nature chimique et environementale à ceux de la Figure 1. L'intensité des signaux est également 10 fois supérieure à celle obtenue après irradiation à 320-500 nm.

L'irradiation par Laser sous atmosphère inerte (azote) ou sous oxygène montre la création de défauts en quantité similaire (intensité du signal identique) mais de nature chimique et environnementale très différente. Il faut noter également que le temps d'irradiation augmente la quantité de défauts produits.

L'irradiation Laser induit donc un phénomène différent à une irradiation UV à 320-500 nm.

### II-3. Effets d'irradiation sur du PVDF induit par une lampe eximère Xe (172 nm).

Les spectres RPE obtenus après irradiation V-UV à 172 nm sont identiques à ceux obtenus après irradiations aux électrons ou aux ions lourds **[22].**

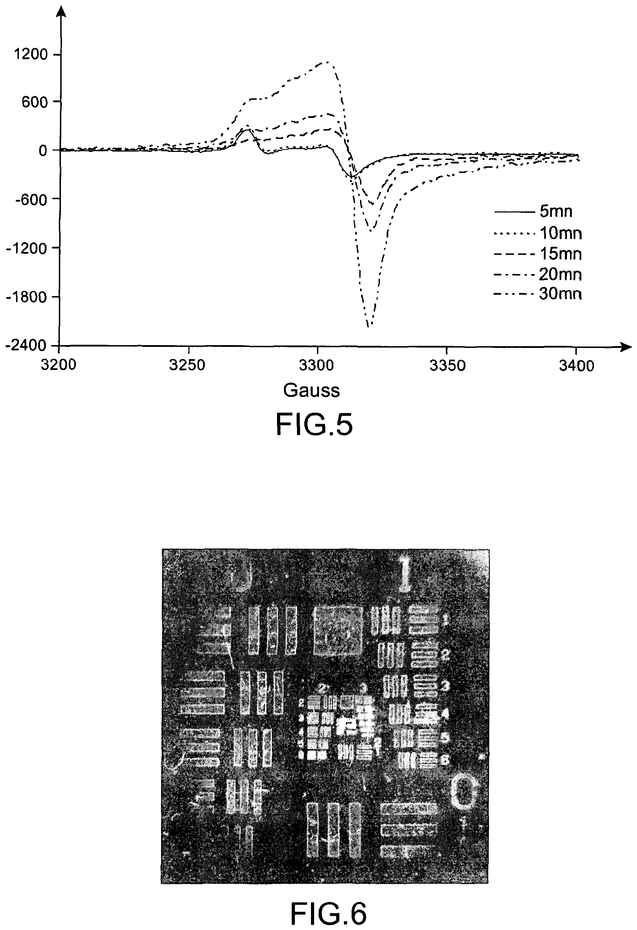

Les spectres de RPE après irradiation V-UV (172 nm) sous azote d'un film de PVDF 9 µm ou d'un film de PVDF 25 µm sont respectivement présentés Figure 4 et Figure 5.

Le spectre de RPE montre la création de défauts au sein de la matrice de PVDF. L'intensité du signal est supérieure à une irradiation au Laser à 266 nm et aux UV 320-500 nm. La forme du signal obtenu montre une complexité représentative de l'existence de différents défauts (différences de nature chimique et environnementale). Ces spectres montrent que l'intensité du signal c'est-à-dire le nombre de défauts augmentent avec le temps d'irradiation. Ces spectres de nature complexe sont dus à la présence de différents radicaux alkyles, fluoroalkyles, hydroperoxydes et peroxydes.

### III. Modification chimique.

### III-1. Modification chimique d'une bande de PVDF soumise à une irradiation UV (500-320 nm) (Exemple I-1) par de l'acide acrylique pas selon la présente invention.

Après irradiation (Exemple I-1), la bande de PVDF est placée sous atmosphère ambiante pendant 10 min avant d'être introduite dans un tube de Slenck contenant une solution d'acide acrylique pur ayant préalablement subi un barbotage d'une heure sous azote. Après avoir scellé le tube, l'ensemble subit de nouveau un barbotage à l'azote durant 10 min avant d'être placé à 60°C pendant 6 h.

La bande modifiée est ensuite nettoyée à l'eau milliQ, soumise aux ultrasons pendant 15 min puis extraite à l'eau bouillante à l'aide d'un appareil de Soxhlet pendant 18 h. Elle a ensuite été séchée pendant 12 h sous vide poussé. L'analyse par spectrométrie IR de la bande de PVDF modifiée confirme la présence de poly(acide acrylique) par la présence d'une bande à 1712 cm⁻¹ correspondante à la déformation C=O.

### III-2. Modification chimique d'une bande de PVDF soumise à une irradiation UV (500-320 nm) (Exemple I-1) par du 2-hydroxyméthylméthacrylate (HEMA) pas selon la présente invention.

Après irradiation (Exemple I-1), la bande de PVDF est placée sous atmosphère ambiante pendant 10 min avant d'être introduite dans un tube de Slenck contenant une solution à 70% de 2-hydroxyméthylméthacrylate (HEMA) dans l'eau ayant préalablement subi un barbotage d'une heure sous azote. Après avoir scellé le tube, l'ensemble subit de nouveau un barbotage à l'azote durant 10 min avant d'être placé à 60°C pendant 2 h.

La bande modifiée est ensuite nettoyée à l'aide d'une solution d'eau milliQ/éthanol (50/50) et soumise aux ultrasons 3 x 15 min. Elle a ensuite été séchée pendant 12 h sous vide poussé. L'analyse par spectrométrie IR de la bande de PVDF modifiée confirme la présence de poly(2-hydroxyméthylméthacrylate) pHEMA par la présence d'une bande à 1724 cm⁻¹ correspondante à la déformation C=O.

### III-3. Modification chimique d'une bande de PVDF soumise à une irradiation UV (500-320 nm) (Exemple I-1) par du 2-diméthylaminoéthylméthacrylate (DMAEMA) pas selon la présente invention.

Après irradiation (Exemple I-1), la bande de PVDF est placée sous atmosphère ambiante pendant 10 min avant d'être introduite dans un tube de Slenck contenant une solution de 2-diméthylaminoéthylméthacrylate (DMAEMA) pur ayant préalablement subi un barbotage d'une heure sous azote. Après avoir scellé le tube, l'ensemble subit de nouveau un barbotage à l'azote durant 10 min avant d'être placé à 60°C pendant 2 h.

La bande modifiée est ensuite nettoyée à l'aide d'une solution d'eau milliQ/éthanol (50/50) et soumise aux ultrasons 3 x 15 min. Elle a ensuite été séchée pendant 12 h sous vide poussé. L'analyse par spectrométrie IR de la bande de PVDF modifiée confirme la présence de poly(2-diméthylaminoéthylméthacrylate) pDMAEMA par la présence d'une bande à 1725 cm⁻¹ correspondante à la déformation C=O.

### III-4. Modification chimique d'une bande de PVDF soumise à une irradiation Laser (266 nm) sous azote (Exemple I-2.a) par de l'acide acrylique selon la présente invention.

Après irradiation (Exemple I-2.a), la bande de PVDF est placée dans un tube de radiogreffage contenant une solution d'acide acrylique pur ou une solution à 70% en poids d'acide acrylique dans l'eau préalablement soumis à un barbotage d'azote pendant 1 h. L'ensemble est de nouveau soumis à un barbotage sous azote de 15 min avant d'être placé à 60°C pendant 4 h.

La bande modifiée est ensuite nettoyée à l'eau milliQ, soumise aux ultrasons pendant 15 min puis extraite à l'eau bouillante à l'aide d'un appareil de Soxhlet pendant 18 h. Elle a ensuite été séchée pendant 12 h sous vide poussé. L'analyse par spectrométrie IR de la bande de PVDF modifiée confirme la présence de poly(acide acrylique) par la présence d'une bande à 1712 cm⁻¹ correspondante à la déformation C=O.

### III-5. Modification chimique d'une bande de PVDF soumise à une irradiation Laser (266 nm) sous atmosphère ambiante (Exemple I-2.b) par de l'acide acrylique pas selon la présente invention.

Après irradiation (Exemple I-2.b), la bande de PVDF est placée dans un tube de radiogreffage contenant une solution d'acide acrylique pur préalablement soumis à un barbotage d'azote pendant 1 h. L'ensemble est de nouveau soumis à un barbotage sous azote de 15 min avant d'être placé à 60°C pendant 4 h.

La bande modifiée est ensuite nettoyée à l'eau milliQ, soumise aux ultrasons pendant 15 min puis extraite à l'eau bouillante à l'aide d'un appareil de Soxhlet pendant 18 h. Elle a ensuite été séchée pendant 12 h sous vide poussé. L'analyse par spectrométrie IR de la bande de PVDF modifiée confirme la présence de poly(acide acrylique) par la présence d'une bande à 1712 cm⁻¹ correspondante à la déformation C=O.

### III-6. Modification chimique d'une bande de PVDF de 9 µm soumise à une irradiation V-UV (172 nm) (Exemple I-3.a) par de l'acide acrylique selon la présente invention.

La bande de PVDF de 9 µm préalablement irradiée (Exemple I-3.a) a été placée dans un tube de radiogreffage contenant 80% en poids d'acide acrylique dans l'eau et 0,25% en poids de sel de Mohr. Après 15 min de barbotage sous azote, le tube est placé dans un bain d'huile à 60°C pendant une heure.

La bande modifiée est ensuite nettoyée à l'eau milliQ, soumise aux ultrasons pendant 15 min puis extraite à l'eau bouillante à l'aide d'un appareil de Soxhlet pendant 18 h. Elle a ensuite été séchée pendant 12 h sous vide poussé. L'analyse par spectrométrie IR de la bande de PVDF modifiée confirme la présence de poly(acide acrylique) par la présence d'une bande à 1712 cm⁻¹ correspondante à la déformation C=O.

### III-7. Modification chimique d'une bande de PVDF de 25 µm soumise à une irradiation V-UV (172 nm) (Exemple I-3.b) par de l'acide acrylique selon la présente invention.

La bande de PVDF de 25 µm préalablement irradiée (Exemple I-3.b) a été placée dans un tube de radiogreffage contenant 80% en poids d'acide acrylique dans l'eau et 0,25% en poids de sel de Mohr. Après 15 min de barbotage sous azote, le tube est placé dans un bain d'huile à 60°C pendant une heure.

La bande modifiée est ensuite nettoyée à l'eau milliQ, soumise aux ultrasons pendant 15 min puis extraite à l'eau bouillante à l'aide d'un appareil de Soxhlet pendant 18 h. Elle a ensuite été séchée pendant 12 h sous vide poussé. L'analyse par spectrométrie IR de la bande de PVDF modifiée confirme la présence de poly(acide acrylique) par la présence d'une bande à 1712 cm⁻¹ correspondante à la déformation C=O.

### III-8. Modification chimique d'une bande de PE de 10 µm d'épaisseur soumise à une irradiation V-UV (172 nm) (Exemple I-3.c) par de l'acide acrylique selon la présente invention.

La bande de Polyéthylène (PE) de 10 µm d'épaisseur préalablement irradiée (Exemple I-3.d) a été placée dans un tube de radiogreffage contenant 80% en poids d'acide acrylique dans l'eau et 0,25% en poids de sel de Mohr. Après 15 min de barbotage sous azote, le tube est placé dans un bain d'huile à 60°C pendant une heure.

La bande modifiée est ensuite nettoyée à l'eau milliQ, soumise aux ultrasons pendant 15 min puis extraite à l'eau bouillante à l'aide d'un appareil de Soxhlet pendant 18 h. Elle a ensuite été séchée pendant 12 h sous vide poussé. L'analyse par spectrométrie IR de la bande de PE modifiée confirme la présence de poly(acide acrylique) par la présence d'une bande à 1701 cm⁻¹ correspondante à la déformation C=O. Un rendement massique de 48,5% a été obtenu.

### III-9. Modification chimique d'une bande de PET de 10 µm d'épaisseur soumise à une irradiation V-UV (172 nm) (Exemple I-3.d) par de l'acide acrylique pas selon la présente invention.

La bande de polyethylènetéréphthalate (PET) de 10 µm d'épaisseur préalablement irradiée (Exemple I-3.d) a été placée dans un tube de radiogreffage contenant 80% en poids d'acide acrylique dans l'eau et 0,25% en poids de sel de Mohr. Après 15 min de barbotage sous azote, le tube est placé dans un bain d'huile à 60°C pendant 2 h.

La bande modifiée est ensuite nettoyée à l'eau milliQ, soumise aux ultrasons pendant 15 min puis extraite à l'eau bouillante à l'aide d'un appareil de Soxhlet pendant 18 h. Elle a ensuite été séchée pendant 12 h sous vide poussé. Un rendement massique de 2% a été obtenu.

Les résultats FTIR ATR ne permettent pas de discriminer avec certitude la présence de polymères en surface. Ce qui semble certain est que l'acide acrylique ne s'est pas polymérisé dans le « bulk ».

### III-10. Modification chimique d'une bande de PC de 10 µm d'épaisseur soumise à une irradiation V-UV (172 nm) (Exemple I-3.e) par de l'acide acrylique pas selon la présente invention.

La bande de polycarbonate (PC) de 10 µm d'épaisseur préalablement irradiée (Exemple I-3.e) a été placée dans un tube de radiogreffage contenant 80% en poids d'acide acrylique dans l'eau et 0,25% en poids de sel de Mohr. Après 15 min de barbotage sous azote, le tube est placé dans un bain d'huile à 60°C pendant 2 h.

La bande modifiée est ensuite nettoyée à l'eau milliQ, soumise aux ultrasons pendant 15 min puis extraite à l'eau bouillante à l'aide d'un appareil de Soxhlet pendant 18 h. Elle a ensuite été séchée pendant 12 h sous vide poussé. Un rendement massique de 0,5% a été obtenu.

Les résultats FTIR ATR ne permettent pas de discriminer avec certitude la présence de polymères en surface. Ce qui semble certain est que l'acide acrylique ne s'est pas polymérisé dans le « bulk ».

### IV. Structuration.

### IV-1. Structuration par irradiation Laser.

La surface d'un film de PVDF 9 µm a été irradiée avec un laser Nd: YAG (266 nm, 30 min) suivi du greffage d'acide acrylique conformément au protocole de l'exemple III-5 pas selon la présente invention.

La cartographie IR en transmission de la surface du film de PVDF ainsi traité permet d'observer à 1712 cm⁻¹ la bande du 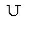 C=O libre de l'acide acrylique.

La cartographie IR montre que l'irradiation et le radiogreffage d'acide acrylique sont bien spatialement définis et représentent bien la forme du faisceau.

### IV-2. Structuration par irradiation en présence d'un masque.

Deux masques différents ont été utilisés :
- Masque 1 : Masque positif en silice fondue (Mire USAF, Edmund optics) ;
- Masque 2 : Masque négatif en silice fondue (Mire USAF, Edmund optics).

### IV-2.a. Structuration par irradiation et radiogreffage selon la présente invention.

Les différentes bandes de PVDF et de PTFE-FEP ont été irradiées par une lampe excimère à 172 nm sous azote pour des temps d'irradiation variant typiquement entre 10 min et 6 h, notamment entre 10 min et 2 h.

### Solution de greffage :

Une solution contenant 80% en poids d'acide acrylique dans l'eau avec 0,25% de sel de Mohr subit un bullage d'azote pendant 15 min. L'échantillon irradié est alors placé dans cette solution et l'ensemble est alors porté à 60°C pendant un temps qui peut varier typiquement entre 10 min et 1 h.

Le tableau 2 ci-après reprend les conditions opératoires mises en oeuvre.

**Tableau 2 : Masque = type de masque ; Pol = type de polymère ; Distance = Distance source/échantillon ; Temps(i) = Temps d'irradiation ; [AA] = concentration en monomères dans la solution de greffage ; Temps(g) = Temps de greffage et FTIR = Analyse FTIR.**

| Masque | Pol | Distance (cm) | Temps (i) (min) | [AA] | Temps (g) min | FTIR |
|---|---|---|---|---|---|---|
| 1 | PVDF | 6 | 60 | 80% | 40 | Présence de PAA |
| 2 | PVDF | 5 | 18 | 80% | 60 | Présence de PAA |
| 1 | PVDF | 3,9 | 60 | / | / | / |
| 1 | PVDF | 5,7 | 60 | 80% | 35 | Présence de PAA |
| 1 | PTFE-FEP | 3 | 30 | 80% | 60 | Présence de PAA |

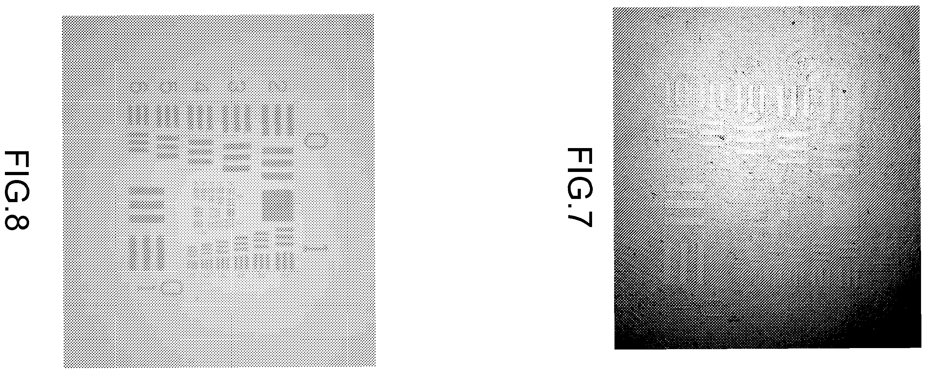

Les images Figure 6 et Figure 7 montrent les résultats obtenus après irradiation avec une lampe excimère (172 nm) et en présence de masque positif ou négatif suivi d'une étape de radiogreffage avec de l'acide acrylique.

Sur la photographie de la Figure 6, l'intérieur des formes géométriques et des chiffres est constitué de PVDF-g-PAA alors que le reste de la membrane est du PVDF vierge.

Sur la photographie de la Figure 7, l'intérieur des formes géométriques et des chiffres est constitué de PVDF vierge alors que le reste de la membrane est du PVDF-g-PAA.

Le spectre 3D obtenu après cartographie IR d'un des motifs présents dans la membrane présentée Figure 7. montre bien la haute résolution spatiale du procédé présenté plus haut.

Afin de donner une validation supplémentaire, l'échantillon obtenu et présenté Figure 6 a subit une étape de métallisation.

### Solution de métallisation :

L'échantillon obtenu après irradiation et greffage est plongé à température ambiante dans une solution de sulfate de cuivre à 0,1 N pendant 15 min. Par la suite, l'échantillon est rincé abondamment à l'eau milliQ avant d'être placé deux fois sous sonication pendant 2 min.

Une solution de soude à 1 N (30 mL) est chauffée à 80°C sous agitation. A cette solution, sont ajoutés 300 mg de NaBH₄. L'échantillon qui a chélaté le cuivre est alors placé dans la solution de réduction pendant environ 3 min puis il est retiré de cette solution avant d'être rincé abondamment à l'eau milliQ puis séché.

La Figure 8 présente l'échantillon de la Figure 6 préalablement irradié avec une lampe excimère (172 nm) suivi d'une étape de radiogreffage avec de l'acide acrylique puis métallisé. Les zones qui présentent une couleur brune ou cuivrée correspondent aux zones de PVDF-g-PAA qui ont chélaté des ions cuivre par la suite réduits. Cette démonstration indirecte montre de façon claire l'efficacité des moyens mis en oeuvre.

### IV-2.b. Structuration par irradiation et révélation chimique pas selon la présente invention.

Les différentes bandes de PVDF ont été irradiées par une lampe excimère à 172 nm sous azote pour des temps d'irradiation variant typiquement entre 10 min et 6 h, notamment entre 10 min et 2 h.

Les zones qui ne sont pas protégées par les masques sont définies comme précédemment comme zones actives dans lesquelles il existe des ruptures de chaîne et donc des radicaux. Ces membranes ont été soumises à une solution de « révélation chimique » (ou solution de « etching ») très basique et oxydante à 70°C pendant un temps compris entre 10 min et 6 h, notamment entre 10 min et 3 h.

### Solution de « etching » :

Une solution de KOH à 10 N est préparée. A cette solution, est ajouté du KMnO₄ en excès jusqu'à ce que la solution obtenue conserve une couleur violette stable. Si la solution vire au bleu/vert, un ajout de KMnO₄ est nécessaire. Cette solution est ensuite portée à 70°C sous agitation.

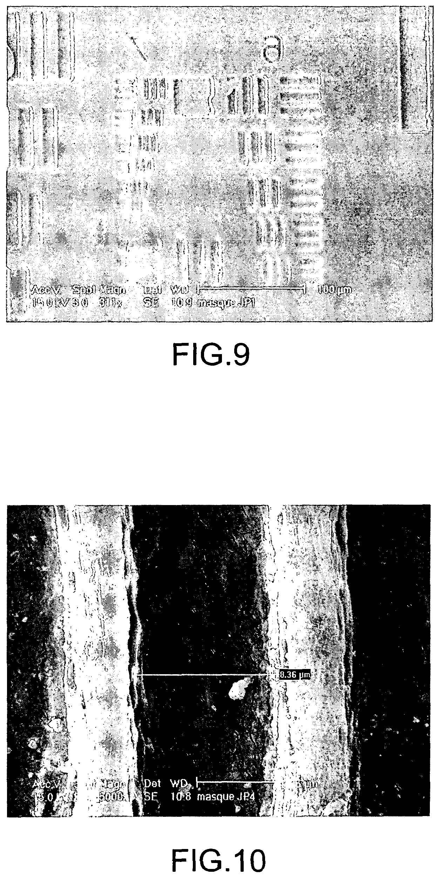

La Figure 9 présente l'image obtenue au microscope électronique à balayage (MEB) de cette membrane après révélation chimique. La zone présentée est la plus petite des 3 carrés présents sur le masque de départ.

La Figure 10 présente un grossissement d'une partie de la Figure 9 obtenue au MEB. Elle montre bien que la membrane de PVDF a été « révélée » ou « creusée » au niveau des zones endommagées qui n'étaient pas protégées par le masque.

### V. Influence du temps d'irradiation en V-UV sur le pourcentage de greffage de l'acide acrylique selon la présente invention.

L'influence du temps d'irradiation à 172 nm (V-UV) sur le rendement de greffage en masse de PAA, sur la variation de surface après greffage de PAA et sur la variation d'épaisseur après greffage de PAA a été étudiée sur des membranes de PVDF de 9 µm (Tableau 3) et 25 µm (Tableau 4) d'épaisseur. Les conditions d'irradiations et de greffage sont identiques à celles décrites dans l'Exemple III-6 pour les membranes de PVDF de 9 µm et à celles décrites dans l'Exemple III-7 pour les membranes de PVDF de 25 µm d'épaisseur.

**Tableau 3 : Influence du temps d'irradiation à 172 nm de membrane de PVDF 9 µm sur Y%, S% et E%.**

| **Temps d'irradiation (min)** | **Rendement de greffage en masse (Y%)** | **Variation de surface (S%)** | **Variation d'épaisseur (E%)** |
|---|---|---|---|
| **5** | 13,4 | 3,7 | 6,67 |
| **10** | 16,6 | 0 | 11,1 |
| **15** | 45,6 | 3 | 48,9 |
| **30** | 260,7 | 4,7 | 285,2 |

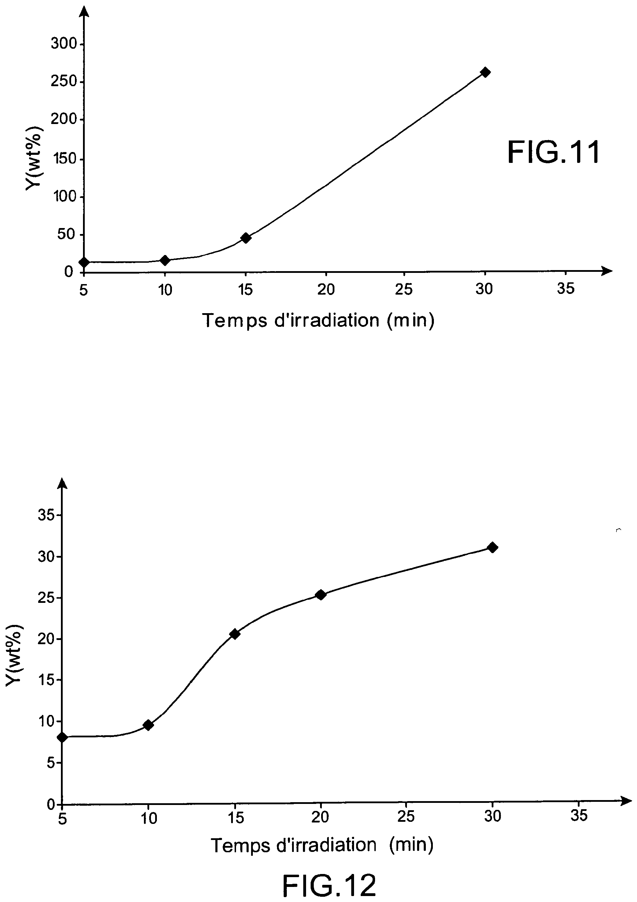

La Figure 11 est une représentation graphique du rendement de greffage en masse (Y%) en fonction du temps d'irradiation de membrane de PVDF 9 µm.

**Tableau 4 : Influence du temps d'irradiation à 172 nm de membrane de PVDF 25 µm sur Y%, S% et E%.**

| **Temps d'irradiation (min)** | **Rendement de greffage en masse (Y%)** | **Variation de surface (S%)** | **Variation d'épaisseur (E%)** |
|---|---|---|---|
| **5** | 8,1 | 2,9 | 34,4 |
| **10** | 9,5 | 2,9 | 32,8 |
| **15** | 20,5 | 5,6 | 41,6 |
| **20** | 25,2 | 5,6 | 36 |
| **30** | 30,9 | 5,9 | 58,4 |

La Figure 12 est une représentation graphique du rendement de greffage en masse (Y%) en fonction du temps d'irradiation de membrane de PVDF 25 µm.

### VI. Radiogreffage de PAA traversant dans des membranes de type PVDF.

L'analyse EDX permet d'obtenir une information spatiale et chimique de la répartition d'un élément chimique au sein d'un objet.

Les membranes modifiées chimiquement par du PAA grâce au procédé décrit ci-dessus, sont préalablement immergées pendant 24 h dans une solution de sulfate de cuivre ou de chlorure de potassium. Les protons de la fonction acide carboxylique présente dans le PAA sont alors échangés avec les cations qui sont ici le cuivre Cu²⁺ et le potassium K⁺. Toute zone contenant du PAA sera alors transformée en sel correspondant.

Les échantillons ainsi obtenus sont insérés dans des résines puis des tranches de membranes sont réalisées. Elles sont par la suite soumises à une irradiation par les électrons du MEB. Le détecteur récupère les photons X émis par l'échantillon. En fonction des éléments constituants l'échantillon, différents photons X d'énergie différente seront émis. A chaque élément chimique, correspondent des photons X d'énergie déterminée. On peut donc obtenir avec précision l'emplacement d'élements chimiques sur la tranche des membranes.

En analyse EDX, est obtenu, sur une épaisseur d'une dizaine de microns pour des membranes de 9 µm, un profil présentant une régularité et une intensité moyenne de photons X correspondant à des photons X émis par l'atome de Fluor. Ce résultat est cohérent de part la constitution des membranes de PVDF où le Fluor est présent partout et en grande quantité. En regardant les photons X émis spécifiquement par le cuivre ou le potassium, des renseignements quant à leur localisation et leur quantité peuvent être obtenus. Comme explicité précédemment, la visualisation de photons X pour le cuivre et le potassium peut être directement corrélée avec la présence de PAA résolu spatialement dans la tranche. Ce type d'analyse est la seule qui permette de savoir avec précision si la membrane a été modifiée dans le bulk et si le greffage du PAA est traversant.

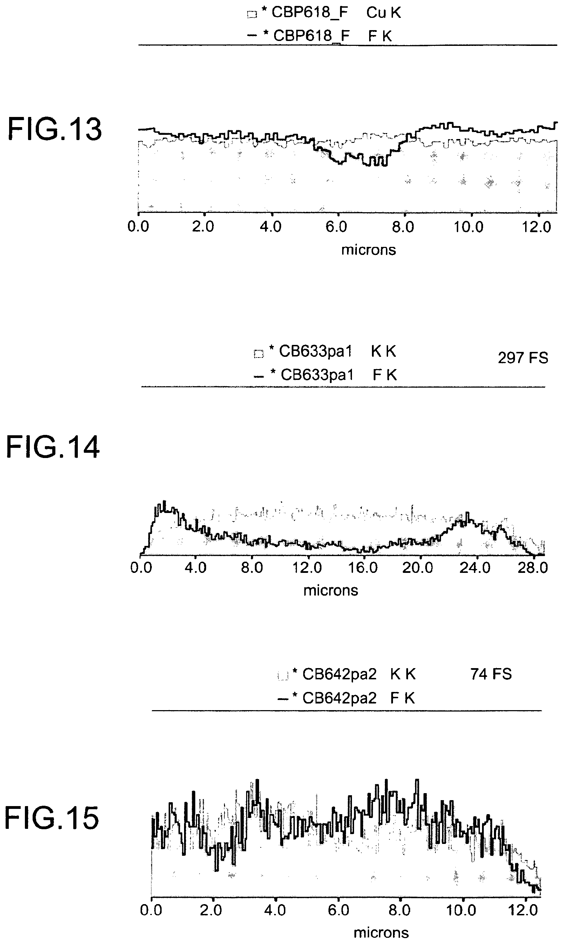

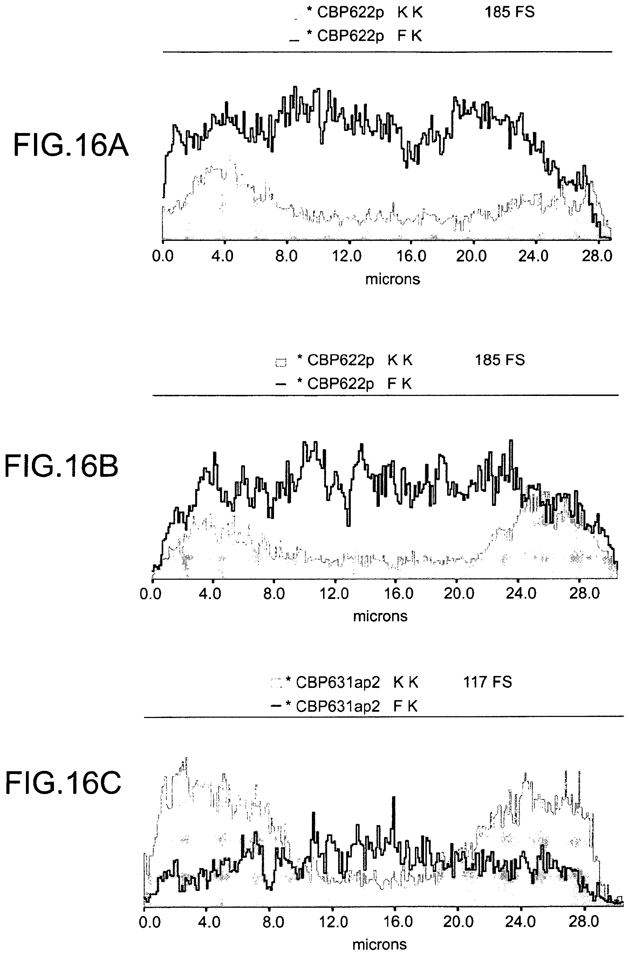

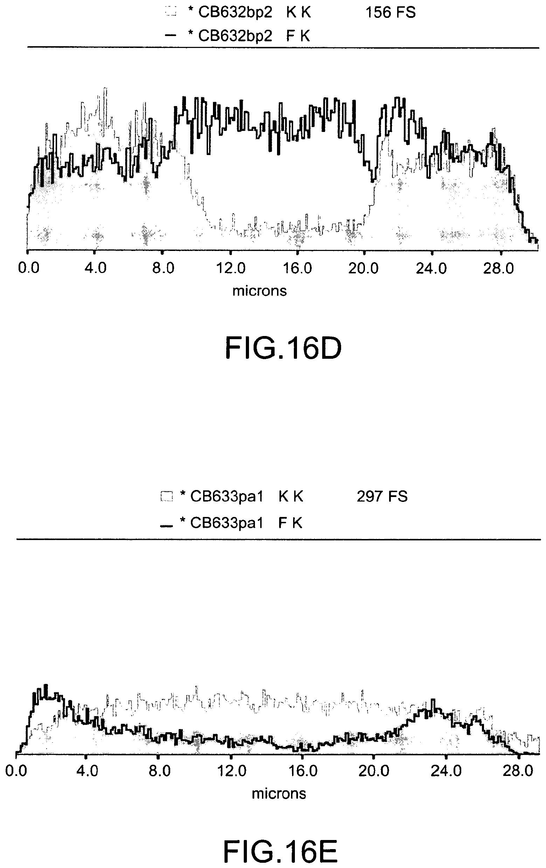

Les analyses présentées ici montrent que le radiogreffage d'acide acrylique de membranes de PVDF irradiées avec une lampe excimère (172 nm) ou avec un Laser (266 nm) est traversant dans l'épaisseur. Ce fait est nouveau au regard de l'état de l'art.
VI-1. La Figure 13 présente l'analyse EDX (Fluor et Cuivre) de la tranche d'un film de PVDF 9 µm radiogreffé avec du PAA après irradiation de 30 min avec une lampe excimère V-UV (172 nm) sous azote.
   Les mêmes analyses ont été réalisées sur des films de PVDF radiogreffé après irradiation de 5, 10 et 15 min par une lampe excimère (172 nm) sous azote et toutes les analyses ont montré que le radiogreffage était traversant même après 5 min d'irradiation.
VI-2. La Figure 14 présente l'analyse EDX (Fluor et Potassium) de la tranche d'un film de PVDF 25 µm radiogreffé avec du PAA après irradiation de 30 min avec une lampe excimère V-UV (172 nm).
VI-3. La Figure 15 présente l'analyse EDX (Fluor et Potassium) de la tranche d'un film de PVDF 9 µm radiogreffé avec du PAA après irradiation de 30 min avec un Laser Nd :YAG (266 nm) sous azote.
VI-4. La Figure 16 présente l'analyse EDX (Fluor et Potassium) de la tranche d'un film de PVDF 25 µm radiogreffé avec du PAA après irradiation sous azote de 5 min (Figure 16A), 10 min (Figure 16B), 15 min (Figure 16C), 20 min (Figure 16D) et 30 min (Figure 16E) par une lampe excimère (172 nm). La concentration d'acide acrylique est identique pour les cinq temps.

Pour comparaison, des profils identiques ont été obtenus après irradiation électronique (dose identique pour toutes les expériences) mais en faisant varier la concentration en acide acrylique **[23].** Malheureusement, le contrôle de l'épaisseur de l'acide acrylique au sein de la membrane de PVDF irradiée par un faisceau d'électrons est peu reproductible. Dans le cas de la présente invention, le temps d'irradiation en fonction de l'épaisseur de la membrane permet un contrôle plus précis de la modification du film dans son épaisseur.

### RÉFÉRENCES

[1]. Demande internationale WO 2009/040365 au nom du CEA publiée le 2 avril 2009, demande internationale WO 2004/004053 A2 au nom due Pirelli publieé le 8 Janvier 2004;
**[2].** Deng, J. et al. Progress in Polymer Science. 2009, vol. 34, pages 156-193 ;
**[3].** He, D. et al. Progress in Polymer Science. 2009. vol. 34, pages 62-98 ;
**[4].** Chen, Y.W. et al. Polymer. 2007. vol. 48(26), pages 7604-7613, Deng, et al. Surface Review and Letters. 2007. vol. 14, pages 23-30;
**[5].** Gejo, J. L. et al. Photochemical & Photobiological Sciences. 2006. vol. 5, pages 948-954 ;
**[6].** Svorcik, V. et al. Nucl. Instr. And Meth. In Phys. Res. B. 2004. vol. 217, pages 307-313 ;
**[7].** Gupta, D. Color. Technol. 2007. vol. 123, pages 248-251 ;
**[8].** Zhu, Z. Applied Surface Science. 2005. vol. 252, pages 303-310 ;
**[9].** Dargaville, T. R. et al. J. Polym. Sci. Pat B : Polym Phys. 2006. vol. 44, pages 3253-3264 ;
[10]. Pireaux, J.J. et al. Nucl. Instr. And Meth. In Phys. Res. B. 1995, vol. 105, pages 186-191 ;
[11]. Katan, E. et al. Journal of Applied Polymer Science. 1998. vol. 70, pages 1471-1481 ;
**[12].** Vasilets, V.N. Journal of Polymer Science : part A : Polymer Chemistry. 1998. vol. 36, pages 2215-2222 ;
**[13].** Truica-Marasescu, F-E. Macromolecular Chemistry and Physics. 2005. vol. 206, pages 744-757 ;
**[14].** Lippert, T. Plasma Processes and Polymers. 2005. vol. 2, pages 525-546 ;
**[15].** Izumi, Y. Bull. Chem. Soc. Jpn. 1998. vol. 71, pages 2721-2725 ;
**[16].** Charbonnier, M. Applied Surface Science. 1997. vol. 109/110, pages 206-211 ;
**[17].** Kang, E. T. Advanced Materials. 2000. vol. 12, pages 1481-1494 ;
**[18].** Dadsetan, M. Journal of Applied Polymer Science. 2000. vol. 76, pages 401-407 ;
**[19].** Niino, H. Appl. Phys A. 2001. vol. 72, pages 53-57 ;
**[20]** Farquet, P. et al. Macromolecules. 2008. vol. 41(17), pages 6309-6316;
**[21]** Kesting, W. et al. Die Angewandte Makromolekulare Chemie. 1990. vol. 182, pages 177-186;
**[22]**. Betz, N et al. Radiat. Phys. Chem. 1996. vol. 47(3), pages 411-414 ;
**[23].** Clochard, MC. et al. Polymer. 2004. vol. 45, pages 8683-8694.

## Revendications

1. Procédé pour modifier chimiquement une matrice polymérique choisie parmi les matrices en polymères fluorés présentant aucun groupement aromatique dans la chaîne principale ou dans les chaînes latérales et les matrices en polymères aliphatiques comprenant plusieurs unités, identiques ou différentes, de formule (I) :
-C(R₁)(R₂)-C(R₃)(R₄)- (I)
dans laquelle les groupements R₁, R₂, R₃ et R₄, identiques ou différents, sont choisis parmi un hydrogène, un halogène, un groupement alkyle en 1 à 6 atomes de carbone éventuellement substitué et un groupement hétéroalkyle en 1 à 6 atomes de carbone éventuellement substitué, un groupement nitro, un groupement cyano, un groupement amine, un groupement acide carboxylique, un groupement acide sulfonique, un groupement amide, un groupement ester, un groupement imide et un groupement éther,
**caractérisé en ce que** ledit procédé comprend les étapes consistant à :
a₁) irradier, sous gaz inerte, qui n'absorbe pas à la longueur d'onde d'irradiation, ladite matrice par une lumière UV de longueur d'onde inférieure à 300 nm en utilisant une lampe excimère V-UV où V-UV représente une sous-bande de l'UV-C de 200 à 100 nm ou des irradiations laser effectuées avec un laser impulsionnel Nd:YAG opérant à 266 nm, pour générer, à une distance supérieure à 250 nm, des zones présentant des chaînes courtes de polymères, formées par scission des chaînes existantes lors du passage du rayonnement UV et présentant des radicaux libres ci-après désignées «zones activées»;
b₁) mettre en contact ladite matrice irradiée et ne présentant que des radicaux de type alkyle obtenue à l'étape (a₁) avec une solution contenant au moins un composé porteur d'au moins une insaturation éthylénique,
ladite solution étant soumise à un barbotage sous azote préalablement à ladite mise en contact et dès cette mise en contact et induire le greffage par réaction radicalaire dans la matrice polymérique d'au moins une unité issue du composé porteur une insaturation éthylénique et avantageusement de plusieurs unités du (ou des différents) composé (s) porteur (s) d'une insaturation éthylénique mis en présence de la matrice polymérique irradiée, la 1^{ère} de ces unités étant liée à la matrice polymérique par une liaison covalente impliquant un atome de ladite matrice et un atome de ladite unité.

2. Procédé selon la revendication 1, **caractérisé en ce que** ladite matrice polymérique est une matrice en un polymère fluoré choisi dans le groupe constitué par les homo- et copolymères de fluorure de vinylidène ; les homo- et copolymères de trifluoroéthylène ; les copolymères de fluoroéthylène et de propylène ; les copolymères de tétrafluoroéthylène et de tétrafluoropropylène ; les copolymères d'éthylène et d'au moins un monomère fluoré ; et leurs mélanges.

3. Procédé selon la revendication 1, **caractérisé en ce que** ladite matrice polymérique est une matrice en polypropylène (PP) ou en polyéthylène (PE).

4. Procédé selon l'une quelconque des revendications précédentes, **caractérisé en ce que** ladite irradiation est réalisée en présence d'un masque.

5. Procédé selon l'une quelconque des revendications précédentes, **caractérisé en ce que** ledit composé présentant au moins une insaturation éthylénique est un composé de formule (II) :
(R₄)(R₅)C=C(R₆)(R₇) (II)
dans laquelle les groupes R₄ à R₇, identiques ou différents, représentent un atome monovalent non métallique tel qu'un atome d'halogène, un atome d'hydrogène, un groupe chimique saturé ou insaturé, tel qu'un groupe alkyle, aryle, un groupe -COOR₈ ou -OC(O)R₈ dans lequel R₈ représente un atome d'hydrogène ou un groupe alkyle en C₁-C₁₂ et de préférence en C₁-C₆, un nitrile, un carbonyle, une amine ou un amide.

6. Procédé selon l'une quelconque des revendications précédentes, **caractérisé en ce que** ledit composé présentant au moins une insaturation éthylénique est choisi dans le groupe constitué par l'acétate de vinyle, l'acide acrylique, l'acrylonitrile, le méthacrylonitrile, le méthacrylate de méthyle, le 2-hydroxyméthylméthacrylate, le méthacrylate d'éthyle, le 2-diméthylamino-éthylméthacrylate, le méthacrylate de butyle, le méthacrylate de propyle, le méthacrylate d'hydroxyéthyle, le méthacrylate d'hydroxypropyle, le méthacrylate de glycidyle, le méthacrylate de hydroxyéthyle, et leurs dérivés ; un acrylamide et notamment un méthacrylamide d'amino-éthyle, propyle, butyle, pentyle et hexyle, un cyanoacrylate, un diacrylate et di-méthacrylate, un tri-acrylate et tri-méthacrylate, un tétra-acrylate et tétra-méthacrylate, le styrène et ses dérivés, le parachloro-styrène, le pentafluoro-styrène, la N-vinyl pyrrolidone, la 4-vinyl pyridine, la 2-vinyl pyridine, les halogénures de vinyle, d'acryloyle ou de méthacryloyle, le di-vinylbenzène (DVB).

7. Procédé pour structurer une matrice polymérique en un polymère fluoré ou en un polymère aliphatique consistant à soumettre cette dernière à un procédé tel que défini à l'une quelconque des revendications 1 à 6, dans lequel par structurer on entend créer des zones activées disposées selon un schéma prédéterminé, créer un "patterning", et induire le greffage de composés uniquement dans les zones activées.

## Patentansprüche

1. Verfahren zum chemischen Modifizieren einer Polymermatrix, ausgewählt aus Fluorpolymermatrizen ohne aromatische Gruppe in der Hauptkette oder in den Seitenketten und aus aliphatischen Polymermatrizen, die mehrere identische oder verschiedene Einheiten der Formel (I) enthalten:
-C(R₁)(R₂)-C(R₃)(R₄)- (I)
worin die Gruppen R₁, R₂, R₃ und R₄, die identisch oder verschieden sind, ausgewählt sind aus Wasserstoff, Halogen, einer gegebenenfalls substituierten Alkylgruppe mit 1 bis 6 Kohlenstoffatomen und einer gegebenenfalls substituierten Heteroalkylgruppe mit 1 bis 6 Kohlenstoffatomen, einer Nitrogruppe, einer Cyanogruppe, einer Amingruppe, einer Carbonsäuregruppe, einer Sulfonsäuregruppe, einer Amidgruppe, einer Estergruppe, einer Imidgruppe und einer Ethergruppe,
**dadurch gekennzeichnet, dass**
das Verfahren die folgenden Schritte umfasst:
a₁) Bestrahlen der Matrix mit UV-Licht mit einer Wellenlänge von weniger als 300 nm unter Inertgas, das bei der Bestrahlungswellenlänge nicht absorbiert, unter Verwendung einer V-UV-Excimerlampe, wobei V-UV ein UV-C-Unterband von 200 bis 100 nm darstellt, oder mit Laserbestrahlungen, die mit einem Nd:YAG-Impulslaser bei 266 nm durchgeführt werden, um in einem Abstand von mehr als 250 nm Zonen mit kurzen Ketten von Polymeren zu erzeugen, die durch Spaltung der vorhandenen Ketten während des Durchtritts von UV-Strahlung gebildet werden und freie Radikale aufweisen, im folgenden als "aktivierte Zonen" bezeichnet,
b₁) Inkontaktbringen der in Schritt (a₁) erhaltenen, bestrahlten Matrix, die nur Alkylreste aufweist, mit einer Lösung, die zumindest eine Verbindung enthält, die zumindest eine ethylenische Ungesättigtheit trägt,
wobei die Lösung vor dem Inkontaktbringen und sobald dieser Kontakt hergestellt wird, einem Einleiten von Stickstoff ausgesetzt wird, und
Bewirken der Pfropfung durch Radikalreaktion in der Polymermatrix von zumindest einer Einheit, die von der Verbindung stammt ist, die eine ethylenische Ungesättigtheit trägt, und vorteilhafterweise von mehreren Einheiten der (oder von unterschiedlichen) Verbindung(en), die eine ethylenische Ungesättigtheit trägt bzw. tragen und mit der bestrahlten Polymermatrix in Kontakt gebracht ist bzw. sind, wobei die erste dieser Einheiten durch eine kovalente Bindung an die Polymermatrix gebunden ist, die ein Atom der Matrix und ein Atom der Einheit umfasst.

2. Verfahren nach Anspruch 1, **dadurch gekennzeichnet, dass** die Polymermatrix eine Fluorpolymermatrix ist, ausgewählt aus der Gruppe bestehend aus Homo- und Copolymeren von Vinylidenfluorid; Homo- und Copolymeren von Trifluorethylen; Copolymeren von Fluorethylen und Propylen; Copolymeren von Tetrafluorethylen und Tetrafluorpropylen; Copolymeren von Ethylen und zumindest einem fluorierten Monomer; und deren Gemischen.

3. Verfahren nach Anspruch 1, **dadurch gekennzeichnet, dass** die Polymermatrix eine Matrix aus Polypropylen (PP) oder Polyethylen (PE) ist.

4. Verfahren nach einem der vorangehenden Ansprüche, **dadurch gekennzeichnet, dass** die Bestrahlung unter Vorliegen einer Maske durchgeführt wird.

5. Verfahren nach einem der vorangehenden Ansprüche, **dadurch gekennzeichnet, dass** die Verbindung mit zumindest einer ethylenischen Ungesättigtheit eine Verbindung der Formel (II) ist:
(R₄)(R₅)C = C(R₆)(R₇) (II)
worin die Gruppen R₄ bis R₇, identisch oder verschieden, ein nichtmetallisches einwertiges Atom darstellen, wie ein Halogenatom, ein Wasserstoffatom, eine gesättigte oder ungesättigte chemische Gruppe, wie eine Alkyl-, Arylgruppe, eine Gruppe -COOR₈ oder -OC(O)R₈, in der R₈ ein Wasserstoffatom darstellt, oder eine C₁ - C₁₂ - und vorzugsweise eine C₁ - C₆ - Alkylgruppe, ein Nitril, ein Carbonyl, ein Amin oder ein Amid.

6. Verfahren nach einem der vorangehenden Ansprüche, **dadurch gekennzeichnet, dass** die zumindest eine ethylenische Ungesättigtheit aufweisende Verbindung ausgewählt ist aus der Gruppe bestehend aus Vinylacetat, Acrylsäure, Acrylnitril, Methacrylnitril, Methylmethacrylat, 2-Hydroxymethylmethacrylat, Ethylmethacrylat, 2-Dimethylaminoethylmethacrylat, Butylmethacrylat, Propylmethacrylat, Hydroxyethylmethacrylat, Hydroxypropylmethacrylat, Glycidylmethacrylat, Hydroxyethylmethacrylat und deren Derivaten; einem Acrylamid und insbesondere einem Aminoethyl-, Propyl-, Butyl-, Pentyl- und Hexylmethacrylamid, einem Cyanacrylat, einem Diacrylat und Dimethacrylat, einem Triacrylat und Trimethacrylat, einem Tetraacrylat und Tetramethacrylat, Styrol und seine Derivaten, Parachlorstyrol, Pentafluorstyrol, N-Vinylpyrrolidon, 4-Vinylpyridin, 2-Vinylpyridin, Vinyl-, Acryloyl- oder Methacryloylhalogeniden, Divinylbenzol (DVB).

7. Verfahren zum Strukturieren einer Polymermatrix aus einem Fluorpolymer oder einem aliphatischen Polymer, umfassend das Unterwerfen derselben einem Verfahren nach einem der Ansprüche 1 bis 6, wobei unter Strukturieren das Schaffen von aktivierten Zonen zu verstehen ist, die nach einem vorbestimmten Muster angeordnet sind, sowie das Erzeugen einer "Musterung (Patterning)" und das Bewirken der Pfropfung von Verbindungen nur in den aktivierten Zonen.

## Claims

1. Process for chemically modifying a polymer matrix chosen from matrices made of fluoropolymers presenting no aromatic group in the main chain or in the side chains and matrices made of aliphatic polymers comprising several units, identical or different, of formula (I):
-C(R₁)(R₂)-C(R₃)(R₄)- (I)
in which the groups R₁, R₂, R₃ and R₄ identical or different, are chosen from a hydrogen, a halogen, an optionally substituted alkyl group having 1 to 6 carbon atoms and an optionally substituted heteroalkyl group having 1 to 6 carbon atoms, a nitro group, a cyano group, an amine group, a carboxylic acid group, a sulfonic acid group, an amide group, an ester group, an imide group and an ether group, **characterized in that** said process comprises the steps consisting in:
a₁) irradiating, under inert gas that does not absorb at the irradiation wavelength, said matrix with UV light having a wavelength of less than 300 nm by using a V-UV excimer lamp where V-UV represents a subband of UV-C from 200 to 100 nm or with laser irradiations carried out with a Nd:YAG pulsed laser operating at 266 nm, in order to generate, at a distance greater than 250 nm, zones that have short polymer chains, formed by scission of the existing chains during the passage of the UV radiation and that have free radicals denoted hereinbelow as "activated zones"; and
b₁) bringing said irradiated matrix only presenting radicals of alkyl type, obtained in step (a₁) into contact with at least one compound bearing at least one ethylenically unsaturated group, said solution being subjected to a sparging under nitrogen prior to said contacting and from this contacting onwards, and inducing the grafting by radical reaction in the polymer matrix of at least one unit derived from the compound bearing an ethylenically unsaturated group and advantageously several units of the (or of different) compound(s) bearing an ethylenically unsaturated group brought into the presence of the irradiated polymer matrix, the first of these units being bonded to the polymer matrix by a covalent bond involving an atom of said matrix and an atom of said unit.

2. Process according to claim 1, **characterized in that** said polymer matrix is a matrix made of a fluoropolymer chosen from the group consisting in hompolymers and copolymers of vinylidenefluoride; homopolymers and copolymers of trifluoroethylene; copolymers of fluoroethylene and of propylene; copolymers of tetrafluoroethylene and of tetrafluoropropylene; copolymers of ethylene and of at least one fluoromonomer; and mixtures thereof.

3. Process according to claim 1, **characterized in that** said polymer matrix is a matrix made of polypropylene (PP) or of polyethylene (PE).

4. Process according to any one of the preceding claims, **characterized in that** said irradiation is carried out in the presence of a mask.

5. Process according to any one of the preceding claims, **characterized in that** said compound having at least one ethylenically unsaturated group is a compound of formula (II):
(R₄)(R₅)C=C(R₆)(R₇) (II)
in which the groups R₄ to R₇, which are identical or different, represent a non-metallic monovalent atom such as a halogen atom, a hydrogen atom, a saturated or unsaturated chemical group such as an alkyl or aryl group, a -COOR₈ or -OC(O)R₈ group in which R₈ represents a hydrogen atom or a C₁-C₁₂, and preferably C₁-C₆, alkyl group, a nitrile, a carbonyl, an amine or an amide.

6. Process according to any one of the preceding claims, **characterized in that** said compound having at least one ethylenically unsaturated group is chosen from the group constituted by vinyl acetate, acrylic acid, acrylonitrile, methacrylonitrile, methyl methacrylate, 2-hydroxymethyl methacrylate, ethyl methacrylate, 2-dimethylaminoethyl methacrylate, butyl methacrylate, propyl methacrylate, hydroxyethyl methacrylate, hydroxypropyl methacrylate, glycidyl methacrylate, hydroxyethyl methacrylate, and derivatives thereof; an acrylamide and in particular an aminoethyl, propyl, butyl, pentyl and hexyl methacrylamide, a cyanoacrylate, a diacrylate and dimethacrylate, a triacrylate and trimethacrylate, a tetraacrylate and tetramethacrylate, styrene and derivatives thereof, para-chlorostyrene, pentafluorostyrene, N-vinylpyrrolidone, 4-vinylpyridine, 2-vinylpyridine, vinyl, acryloyl or methacryloyl halides, and divinylbenzene (DVB) .

7. Process for structuring a polymer matrix made of a fluoropolymer or of an aliphatic polymer consisting in subjecting the latter to a process as defined in any one of claims 1 to 6, wherein "structuring" is understood as creating activated zones positioned according to a predetermined pattern, creating a "patterning" and inducing the grafting of compounds only in the activated zones.
